# EUROPÄISCHE PATENTSCHRIFT

(11) **EP 3 081 343 B1**
(45) Veröffentlichungstag und Bekanntmachung des Hinweises auf die Patenterteilung: **14.07.2021**
(21) Anmeldenummer: 16165015.5
(22) Anmeldetag: 13.04.2016
(51) Int. Cl.: B25J 9/00, B27B 31/00, B27B 5/065

(54) **PLATTENAUFTEILANLAGE SOWIE VERFAHREN ZUM AUFTEILEN VON PLATTENFÖRMIGEN WERKSTÜCKEN**
PLATE PARTITIONING FACILITY AND METHOD FOR PARTITIONING PLATE-SHAPED WORKPIECES
INSTALLATION DE REPARTITION DE PLAQUES ET PROCÉDÉ DESTINÉ À REPARTIR DES PIÈCES USINÉES EN FORME DE PLAQUES

(30) Priorität: 15.04.2015 DE 102015206824
(43) Veröffentlichungstag der Anmeldung: 19.10.2016
(73) Patentinhaber: HOMAG Plattenaufteiltechnik GmbH, 75365 Calw (DE)
(72) Erfinder: ELHAUS, Uwe, 75365 Calw (DE); ZIMBAKOV, Darko, 71155 Altdorf (DE); MARTYNENKO, Sergey, 71083 Herrenberg (DE); KRESS, Martin, 75382 Althengstett (DE); DITTUS, Jens, 72218 Wildberg (DE); KUSSMAUL, Volker, 71149 Bondorf (DE); KEMPF, Martin, 72202 Nagold (DE); SCHÜRER, Marko, 75389 Neuweiler-Agenbach (DE); PFROMMER, Achim, 75387 Neubulach-Liebelsberg (DE); MAIWALD, Wolfgang, 75365 Calw (DE)
(74) Vertreter: DREISS Patentanwälte PartG mbB

(56) Entgegenhaltungen:
- EP-A1- 1 208 933
- EP-A1- 1 627 704
- EP-A1- 1 728 606
- EP-A1- 1 741 527
- EP-A2- 2 735 930
- WO-A1-86/06676
- WO-A1-02/102559
- DE-A1- 4 416 486
- DE-U1-202013 105 573
- None

## Beschreibung

Die Erfindung betrifft eine Plattenaufteilanlage zum Aufteilen von plattenförmigen Werkstücken nach dem Oberbegriff des Anspruchs 1 und ein Verfahren zum Aufteilen von plattenförmigen Werkstücken mittels einer Plattenaufteilanlage nach dem Oberbegriff des Anspruchs 18. Plattenaufteilanlagen sind sowohl vom Markt her als auch aus der DE 10 2008 034 050 A1 und aus der DE 10 2009 038 120 A1 bekannt. Diese Plattenaufteilanlagen dienen zum Aufteilen von großformatigen plattenförmigen Werkstücken, wie sie beispielsweise für die Möbelindustrie verwendet werden. Zum Betrieb dieser Plattenaufteilanlagen ist mindestens eine Bedienperson erforderlich, die nach einem ersten Verfahrensschritt aufgeteilten Werkstücke vom Entnahmetisch entnimmt und beispielsweise einer Abstapelung zuführt, und die andere aufgeteilte Werkstücke vom Entnahmetisch über die Aufteillinie hinweg zurück zum Zuführtisch schiebt, wo das Werkstück wieder von einem Programmschieber einer ersten Fördereinrichtung ergriffen und einem neuen Aufteilvorgang zugeführt werden kann. Dabei ist es bekannt, ein Werkstück durch insgesamt zwei oder mehr auf Teilvorgänge aufzuteilen. Der erste Aufteilvorgang wird auch als Längsschnitt, der zweite Aufteilvorgang als Querschnitt, und der dritte Aufteilvorgang als Nachschnitt bezeichnet.

Eine Plattenaufteilanlage nach dem Oberbegriff des Anspruchs 1 und ein Verfahren nach dem Oberbegriff des Anspruchs 18 sind der EP 1 728 606 A1 zu entnehmen.

Die aus der EP 1 728 606 A1 bekannte Plattenaufteilanlage und das aus der EP 1 728 606 A1 bekannte Verfahren haben den Vorteil, dass die Handhabung von bereits bearbeiteten oder zur Bearbeitung vorgesehenen Werkstücken nicht mehr durch eine Bedienperson erfolgen muss, sondern automatisiert durch einen Roboter vorgenommen wird. Hierdurch wird zum einen die Effizienz der Plattenaufteilanlage gesteigert, da ein Roboter naturgemäß keine Konzentrationsschwächen oder Ermüdungserscheinungen kennt. Auch kann ein Roboter bei entsprechender Auslegung die zum Teil schweren Werkstücke problemlos handhaben. Ein Roboter kann ferner im 24 Stunden Betrieb arbeiten. Darüber hinaus wird durch den Einsatz eines Roboters auch die Betriebssicherheit der Anlage verbessert, da keine Personen mehr bei der Handhabung der Werkstücke gefährdet werden. Auch hat ein Roboter einen größeren Arbeitsbereich, da die Armlänge des Roboters maßgeschneidert für die entsprechende Plattenaufteilanlage ausgelegt werden kann.

Wie aus der EP 1 728 606 A1 hervorgeht, kann der Roboter an Stelle von bisher eingesetzten automatischen Fördereinrichtungen verwendet werden, beispielsweise Schiebern oder Förderbändern oder angetriebenen Rollenbahnen. Gegenüber solchen automatischen Fördereinrichtungen hat der Roboter den Vorteil, dass er nicht nur lineare Bewegungen in einer festgelegten Ebene durchführen kann, sondern das Werkstück beinahe beliebig von einer Position zu einer anderen transportieren und während dieses Transports beispielsweise auch drehen kann.

Aufgabe der vorliegenden Erfindung ist es, eine Plattenaufteilanlage der eingangs genannten Art so weiterzubilden, dass sie besonders wirtschaftlich arbeitet.

Diese Aufgabe wird durch eine Plattenaufteilanlage mit den Merkmalen des Anspruchs 1 und durch ein Verfahren zum Aufteilen von plattenförmigen Werkstücken mit den Merkmalen des Anspruchs 18 gelöst.

Erfindungsgemäß wird vorgeschlagen, dass oberhalb von der ersten Aufteillinie ein passives Zwischenlager vorhanden ist, und dass der Arbeitsbereich des Roboters in der Draufsicht mindestens zum Teil einen Bereich des passiven Zwischenlagers überdeckt.

Durch ein passives Zwischenlager wird eine preiswerte Möglichkeit zum Puffern von halbfertigen Werkstücken (beispielsweise solchen Werkstücken, an denen später noch Nachschnitt durchgeführt werden sollen) geschaffen. Eine Anordnung eines solchen Zwischenlagers oberhalb von der ersten Aufteillinie ist besonders platzsparend.

Vorteilhafte Weiterbildungen sind in Unteransprüchen angegeben.

Als vorteilhafte Weiterbildung wird vorgeschlagen, dass der Arbeitsbereich des Roboters in einer Draufsicht vorzugsweise mindestens zum Teil einen Bereich des ersten Entnahmetisches überdeckt. An dieser Stelle ist der Einsatz eines Roboters besonders wirksam, da er im Bereich des Entnahmetisches beispielsweise ein Werkstück entnehmen und einer Abstapelung zu führen kann, oder ein bearbeitetes Werkstück entnehmen, drehen und der Aufteileinrichtung für eine weitere Bearbeitung zuführen kann, etc.

Als vorteilhafte Weiterbildung wird ferner vorgeschlagen, dass sie mindestens eine Rückfördereinrichtung aufweist, mit der bei der Bearbeitung entstandene Rest-Werkstücke in ein Lager zurück gefördert werden können. Eine solche Plattenaufteilanlage arbeitet ebenfalls besonders effizient, da die Rückforderung ebenfalls automatisiert ist.

Als vorteilhafte Weiterbildung wird ferner vorgeschlagen, dass sie eine weitere erste Fördereinrichtung aufweist, mit der ein auf dem ersten Zuführtisch liegendes Werkstück in Richtung zur ersten Aufteillinie hin bewegt werden kann. Auch dies wirkt effizienzsteigernd, da ein neues Werkstück bereits eingeschoben werden kann, während ein anderes noch Werkstück aufgeteilt wird.

Als vorteilhafte Weiterbildung wird ferner vorgeschlagen, dass die beiden ersten Fördereinrichtungen jeweils einen Programmschieber mit Spannzangen umfassen. Dies ist eine besonders erprobte und zuverlässige Ausgestaltung für die ersten Fördereinrichtungen.

Als vorteilhafte Weiterbildung wird ferner vorgeschlagen, dass der Arbeitsbereich des Roboters in der Draufsicht mindestens zum Teil einen Abstapelbereich überdeckt. Die Flexibilität des Roboters wird so auch für die Abstapelung genutzt.

Als vorteilhafte Weiterbildung wird ferner vorgeschlagen, dass mindestens ein Abstapelbereich in einer Richtung radial zur Basis des Roboters, insbesondere auf Schienen, beweglich ist. Hierdurch wird die Abstapelkapazität erhöht.

Als vorteilhafte Weiterbildung wird ferner vorgeschlagen, dass seitlich und/oder oberhalb vom ersten Zuführtisch und/oder ersten Entnahmetisch ein passives Zwischenlager vorhanden ist, und dass der Arbeitsbereich des Roboters in der Draufsicht mindestens zum Teil einen Bereich des Zwischenlagers überdeckt. Durch ein passives Zwischenlager wird eine preiswerte Möglichkeit zum Puffern von halbfertigen Werkstücken (beispielsweise solchen Werkstücken, an denen später noch Nachschnitt durchgeführt werden sollen) geschaffen. Eine Anordnung eines solchen Zwischenlagers oberhalb vom ersten Zuführtisch und/oder vom ersten Entnahmetisch ist besonders platzsparend.

Als vorteilhafte Weiterbildung wird ferner vorgeschlagen, dass oberhalb vom ersten Zuführtisch ein aktives Zwischenlager angeordnet ist, dem eine eigene Fördereinrichtung zugeordnet ist. Dies erhöht nochmals die Anlageneffizienz, da die dem aktiven Zwischenlager zugeordnete eigene Fördereinrichtung ein zwischengelagertes Werkstück fördern kann, während der Roboter ein anderes Werkstück handhabt.

Als vorteilhafte Weiterbildung wird ferner vorgeschlagen, dass das aktive Zwischenlager oberhalb von dem ersten Zuführtisch und das passive Zwischenlager oberhalb von dem aktiven Zwischenlager angeordnet sind, vorzugsweise derart, dass ein Bereich des aktiven Zwischenlagers nach oben hin für den Roboter zugänglich ist. Die Zwischenlager bilden also eine Art "Stapel", wodurch eine besonders platzsparende Bauweise der Plattenaufteilanlage realisiert wird.

Als vorteilhafte Weiterbildung wird ferner vorgeschlagen, dass seitlich vom ersten Zuführtisch ein aktives Zwischenlager angeordnet ist, dem eine eigene Fördereinrichtung zugeordnet ist, und oberhalb eines Teils des aktiven Zwischenlagers ein passives Zwischenlager angeordnet ist. Auch dies führt zu einer besonders platzsparenden und dennoch effizienten Plattenaufteilanlage.

Als vorteilhafte Weiterbildung wird ferner vorgeschlagen, dass die erste Fördereinrichtung einen Programmschieber mit Spannzangen umfasst, welche in Richtung zum ersten Entnahmetisch eine solche Länge aufweisen, dass sie bis auf den ersten Entnahmetisch reichen, wenn der Programmschieber sich in einer zum ersten Entnahmetisch nächstliegenden Endstellung befindet. Hierdurch wird es vereinfacht, ein zu bearbeitendes Werkstück vom Entnahmetisch her der ersten Fördereinrichtung zuzuführen.

In vorteilhafter Weiterbildung hierzu wird vorgeschlagen, dass der Roboter so angeordnet und ausgebildet ist, dass der Roboter ein, insbesondere auf dem ersten Entnahmetisch liegendes, Werkstück handhaben und durch einen Spalt zwischen der ersten Aufteillinie und einer Andrückeinrichtung der ersten Fördereinrichtung zuführen kann. Beispielsweise muss der Roboter ausreichend nahe zur ersten Aufteillinie angeordnet sein, und er muss in der Lage sein, ein flach auf dem Entnahmetisch liegendes Werkstück schiebend zur ersten Fördereinrichtung hin zu transportieren. Hierzu muss beispielsweise ein Roboterarm über Gelenke mit ausreichenden Freiheitsgraden verfügen, und der Roboter muss ein flach auf dem Entnahmetisch liegendes Werkstück an dessen Oberseite halten können. Damit kann das Zuführen eines Werkstücks vom Entnahmetisch her durch den Roboter erfolgen. Dies erhöht die Anlageneffizienz bei gleichzeitig sehr einfachem Aufbau der Plattenaufteilanlage.

Es wird weiterhin vorzugsweise vorgeschlagen, dass die Länge der Spannzangen an das Zuführen des Werkstücks durch den Spalt angepasst ist, so dass der Roboter das Werkstück in einfacher Weise dem Programmschieber übergeben kann.

Als vorteilhafte Weiterbildung wird ferner vorgeschlagen, dass der erste Entnahmetisch eine Zwischenlagerfunktion aufweist. Dies wird beispielsweise durch eine ausreichend große Dimensionierung des ersten Entnahmetisches geschaffen, derart, dass zwischengelagerte Werkstücke die Handhabung von vorläufig oder endgültig bearbeiteten Werkstücken auf dem Entnahmetisch nicht behindern. Im Grunde kann damit eine zu einer herkömmlichen Plattenaufteilanlage ganz ähnliche Plattenaufteilanlage eingesetzt werden, bei der zusätzlich ein Roboter angeordnet und eventuell noch der Entnahmetisch erweitert wird. Dies ist eine auch nachrüstbare Variante, die die Vorteile eines Roboters bei herkömmlichen Plattenaufteilanlagen nutzbar macht.

Als vorteilhafte Weiterbildung wird ferner vorgeschlagen, dass die Basis des Roboters im Bereich des ersten Entnahmetisches angeordnet ist. Der Roboter ist somit quasi in den Entnahmetisch integriert bzw. vom Entnahmetisch umgeben. Er kann also besonders effizient für die Handhabung von auf dem Entnahmetisch liegenden Werkstücken eingesetzt werden.

Als vorteilhafte Weiterbildung wird ferner vorgeschlagen, dass die Basis des Roboters oberhalb von der ersten Aufteillinie angeordnet ist. Damit kann der Roboter sowohl den Entnahmetisch als auch den Zuführtisch optimal "bedienen", und ist darüber hinaus platzsparend untergebracht, so dass die Standfläche der Plattenaufteilanlage nicht vergrößert wird.

Als vorteilhafte Weiterbildung wird ferner vorgeschlagen, dass die Basis des Roboters horizontal beweglich ist. Hierdurch wird der Arbeitsbereich des Roboters auf einfache Art und Weise vergrößert.

Besonders vorteilhaft ist dabei, wenn die horizontale Beweglichkeit des Roboters parallel zur Förderrichtung der ersten Fördereinrichtung ist.

Als vorteilhafte Weiterbildung wird ferner vorgeschlagen, dass die Plattenaufteilanlage mindestens einen zweiten Zuführtisch mit einer diesem zugeordneten zweiten Fördereinrichtung, mindestens eine zweite Aufteileinrichtung mit einer zweiten Aufteillinie, und mindestens einen zweiten Entnahmetisch umfasst, wobei die erste Aufteillinie zu der zweiten Aufteillinie in einem Winkel angeordnet ist, der in einem Bereich von 0° bis 180° liegt. Liegt der Winkel bei 0°, sind die "Teil-Plattenaufteilanlagen" nebeneinander und parallel angeordnet. Liegt der Winkel bei 90°, handelt es sich um eine sogenannte "Winkelanlage", und liegt der Winkel bei 180°, sind die beiden "Teil-Plattenaufteilanlagen" parallel zueinander, aber gegensinnig angeordnet. Eine solche Plattenaufteilanlage hat mindestens eine verdoppelte Kapazität.

In vorteilhafter Weiterbildung hierzu wird vorgeschlagen, dass der Arbeitsbereich des Roboters in der Draufsicht mindestens zum Teil einen Bereich des ersten Entnahmetisches und mindestens zum Teil einen Bereich des zweiten Zuführtisches überdeckt. Der Roboter kann somit ein auf dem ersten Entnahmetisch liegendes Werkstück auf den zweiten Zuführtisch bewegen, so dass eine bisher erforderliche komplexe Übergabestation nicht mehr erforderlich ist. Dies gilt insbesondere bei einer sogenannten "Winkelanlage", bei der die zweite Aufteillinie in einem Winkel von 90° gegenüber der ersten Aufteillinie angeordnet ist.
Eine Gesamtanlage mit besonders hoher Kapazität wird dadurch geschaffen, dass die Zuführtische, Aufteileinrichtungen und Entnahmetische nebeneinander und parallel zueinander angeordnet sind, wodurch vorzugsweise eine Vielzahl von Teil-Plattenaufteilanlagen geschaffen wird, dass sämtlichen Zuführtischen eine gemeinsame Zuführeinrichtung zugeordnet ist.

In vorteilhafter Weiterbildung hierzu wird vorgeschlagen, dass jedem Zuführtisch ein aktives Zwischenlager zugeordnet ist, welches in der gleichen vertikalen Ebene wie die Zuführeinrichtung liegt. Eine solche Plattenaufteilanlage ist trotz der hohen Kapazität vergleichsweise klein.

In nochmaliger vorteilhaften Weiterbildung hierzu wird vorgeschlagen, dass eine Abtransporteinrichtung zum Abtransportieren bearbeiteter Werkstücke vertikal in einer anderen Ebene als die Zuführeinrichtung angeordnet ist. Auf diese Weiterbildung führt zu einer verhältnismäßig kleinen Gesamtanlage.

Vorgeschlagen wird vorzugsweise ferner, dass die Plattenaufteilanlage zwei Zuführtische mit jeweiligen Fördereinrichtungen, zwei Aufteileinrichtungen und zwei Entnahmetische aufweist, die nebeneinander und parallel zueinander angeordnet sind, und dass sie einen Roboter umfasst, dessen Arbeitsbereich in der Draufsicht beide Zuführtische und beide Entnahmetische zumindest teilweise überdeckt. Hierdurch wird eine Plattenaufteilanlage mit hoher Kapazität geschaffen, die vergleichsweise preiswert ist, da lediglich ein Roboter für die Handhabung der Werkstücke in beiden parallelen Anlagen verwendet wird.

Vorgeschlagen wird vorzugsweise ferner, dass die Zuführtische, Aufteileinrichtungen und Entnahmetische nebeneinander und parallel zueinander angeordnet sind, und dass die Plattenaufteilanlage zwei Roboter umfasst, die so angeordnet sind, dass sich deren Arbeitsbereiche in der Draufsicht überlappen. Eine solche Plattenaufteilanlage gestattet aufgrund des jeder Teil-Plattenaufteilanlage zugeordneten eigenen Roboters nicht nur einen kombinierten, sondern auch einen unabhängigen Betrieb der beiden Teil-Plattenaufteilanlagen, wodurch die Flexibilität des Betriebs der Gesamtanlage erhöht wird.

In vorteilhafter Weiterbildung hierzu wird vorgeschlagen, dass die Plattenaufteilanlage eine gemeinsame Abtransporteinrichtung für bearbeitete Werkstücke und/oder eine gemeinsame Zuführeinrichtung für zu bearbeitende Werkstücke aufweist, wobei die gemeinsame Abtransporteinrichtung und/oder die gemeinsame Zuführeinrichtung vorzugsweise zwischen den beiden Teil-Plattenaufteilanlagen angeordnet sind. Dies reduziert sowohl den notwendigen Bauraum als auch die Kosten.

Vorgeschlagen wird vorzugsweise ferner, dass die gemeinsame Zuführeinrichtung so ausgebildet ist, dass sie sowohl zu bearbeitende Werkstücke zuführen als auch bei der Bearbeitung entstandene Reststücke in ein Lager zurückfördern kann. Auch dies reduziert sowohl den notwendigen Bauraum als auch die Kosten.

Vorgeschlagen wird vorzugsweise ferner, dass zwischen den beiden Zuführtischen ein aktives Zwischenlager, dem eine eigene Fördereinrichtung zugeordnet ist, angeordnet ist, und/oder ein passives Zwischenlager angeordnet ist. Dies erhöht die Anlageneffizienz bei gleichzeitig geringem erforderlichem Bauraum.

Vorgeschlagen wird vorzugsweise ferner, dass die Plattenaufteilanlage eine Abtransporteinrichtung umfasst, wobei der Arbeitsbereich des Roboters die Abtransporteinrichtung teilweise überdeckt. Die Einsatzmöglichkeiten des Roboters werden hierdurch nochmals erweitert. Bei einer Plattenaufteilanlage mit zwei Teil-Plattenaufteilanlagen wird vorzugsweise vorgeschlagen, dass einer der beiden Zuführtische, die zugehörige Aufteileinrichtung und der zugehörige Entnahmetisch kleiner dimensioniert sind als der andere der beiden Zuführtische und die zugehörige Aufteileinrichtung und der zugehörige Entnahmetisch. Hierdurch werden sowohl Herstellkosten eingespart als auch der für die Aufstellung erforderliche Bauraum reduziert. Dennoch arbeitet eine solche Plattenaufteilanlage sehr effizient.
In Bezug auf das Verfahren zum Aufteilen von plattenförmigen Werkstücken wird vorgeschlagen, dass das Handhaben ein Zuführen des aufgeteilten Werkstücks oder des zwischengelagerten Werkstücks vorzugsweise in einen vordefinierten Bereich der Aufteillinie und mit einer vordefinierten Orientierung des Werkstücks durch den Spalt zwischen der Aufteillinie und der Andrückeinrichtung für eine weitere Aufteilung umfasst. Der Roboter hat bei einer solchen Handhabung den Vorteil, dass die Zuführung unmittelbar mit der vordefinierten Orientierung in den vordefinierten Bereich erfolgen kann. Durch die Präzisionshandhabung mittels des Roboters kann erreicht werden, dass eine Ausrichtung des Werkstücks vor der Aufteilung entfallen kann und mögliche Fehler des Maschinenbedieners bei der Handhabung des Werkstücks ausgeschlossen sind.

In einer bevorzugten Ausführungsform ist das Verfahren so ausgelegt, dass das Handhaben, wenn das aufgeteilte Werkstück bei einer letzten Aufteilung einer Platte entstanden ist und auf dem Entnahmetisch liegt und wenn das aufgeteilte Werkstück einer weiteren Aufteilung bedarf, eine Drehung des Werkstücks um 90° sowie das Zuführen direkt - d.h. ohne Zwischenlagerung - durch den Spalt umfasst. Dadurch kann zum einen Lagerplatz in einem Zwischenlager gespart werden, weil das Werkstück unmittelbar um 90° gedreht, insbesondere für eine Queraufteilung oder für einen Nachschnitt bzw. Drittschnitt zurückgeführt wird. Zum anderen erlaubt es eine sehr schnelle Zurückführung mittels des Roboters, weil das Werkstück bereits auf dem Entnahmetisch liegt und nicht erst aus einem Zwischenlager abgeholt werden muss. Es versteht sich jedoch, dass die erwähnte 90°-Drehung vom Roboter auch bei einem zwischengelagerten Werkstück durchgeführt werden kann, welches dann um 90° gedreht wieder und durch den Spalt zwischen Andrückeinrichtung und erster Aufteillinie der ersten Fördereinrichtung zugeführt werden kann.

In einer weiteren bevorzugten Ausführungsform ist das Verfahren derart gestaltet, dass das Handhaben des aufgeteilten Werkstücks mittels des Roboters ein Zwischenlagern des aufgeteilten Werkstücks in ein Zwischenlager umfasst und wobei eine Verlagerungsbahn des Roboters für das Zwischenlagern des Werkstücks über Aufbauten der Plattenaufteilanlage wie beispielsweise einen Druckbalken oder eine Abtransportbahn hinweg verläuft. Dies spart im Vergleich zu einem Bediener, der um diese Aufbauten ggf. herumlaufen müsste, Zeit bei der Handhabung ein. Auch kann die oben erwähnte Drehung um 90° während des Transports des Werkstücks längs der Verlagerungsbahn oberhalb der Aufbauten der Plattenaufteilanlage erfolgen.

In einer weiteren ähnlichen bevorzugten Ausführungsform umfasst das Handhaben des zwischengelagerten Werkstücks mittels des Roboters ein Entnehmen des zwischengelagerten Werkstücks aus einem Zwischenlager und ein Zuführen zum Entnahmetisch auf einer zweiten Verlagerungsbahn über Aufbauten der Plattenaufteilanlage, insbesondere eine Andrückeinrichtung oder eine Abtransportbahn, hinweg. Auch dabei kann im Vergleich zu einer Durchführung mittels einer Bedienperson Zeit bei der Handhabung eingespart werden. Auch hier kann die oben erwähnte Drehung um 90° während des Transports des Werkstücks längs der Verlagerungsbahn oberhalb der Aufbauten der Plattenaufteilanlage erfolgen.

In einer anderen bevorzugten Ausführungsform umfasst das Verfahren ferner mindestens einen Ermittlungsschritt, in dem eine Reihenfolge von Verfahrensschritten anhand von Zeitdauern von Verfahrensschritten und/oder anhand von mindestens einer mit einem aufgeteilten und/oder zwischengelagerten Werkstück zusammenhängenden Eigenschaft ermittelt wird.

In konkreter bevorzugten Weiterbildung hierzu wird vorgeschlagen, dass das Verfahren ein Berechnen aus bekannten Zeitdauern der Handhabungsschritte und einem in Bearbeitung befindlichen Aufteilungsauftrag, welche Handhabung eines aufgeteilten oder zwischengelagerten Werkstücks durch den Roboter als nächstes erfolgen soll, insbesondere ob ein Zwischenlagern oder eine Abstapelung des aufgeteilten Werkstücks zeitlich vor dem Zuführen des zwischengelagerten Werkstücks durch den Spalt erfolgen soll. Ein solches Verfahren hat den Vorteil, dass die Aufteillinie der Plattenaufteilanlage keinen Leerlauf hat und nicht auf eine Zuführung eines Werkstücks des Roboters durch den Spalt warten muss. Das Handhaben des Roboters bezüglich Zwischenlagern, Abstapeln und Ablegen auf der Abtransporteinrichtung erfolgt möglichst dann, wenn die Zuführung eines Werkstücks durch den Spalt momentan nicht erforderlich ist.

In einer weiteren bevorzugten Ausführungsform umfasst das Verfahren ferner ein Messen und Abspeichern von Zeitdauern für eine Durchführung von Handhabungen durch den Roboter, insbesondere für das Zuführen des Werkstücks durch den Spalt zwischen der Aufteillinie und der Andrückeinrichtung, für eine Zwischenlagerung auf dem Entnahmetisch oder in einem Zwischenlager, für eine Abstapelung auf einem Abstapelbereich oder für ein Ablegen auf einer Abtransporteinrichtung. Bei dieser Ausführungsform kann in vorteilhafter Weise in Echtzeit vorzugsweise in einer Einfahrphase der Plattenaufteilanlage festgestellt werden, wie lange der Roboter für bestimmte Handhabungen benötigt, um daraus für das zukünftige Verfahren der Plattenaufteilanlage einen optimalen Ablauf mit möglichst wenig Leerlauf bei der Aufteillinie zu berechnen. Ein ungenaues Abschätzen der Zeitdauern für die einzelnen Handhabungen und ein entsprechendes Vorprogrammieren der Zeitdauern kann damit entfallen.

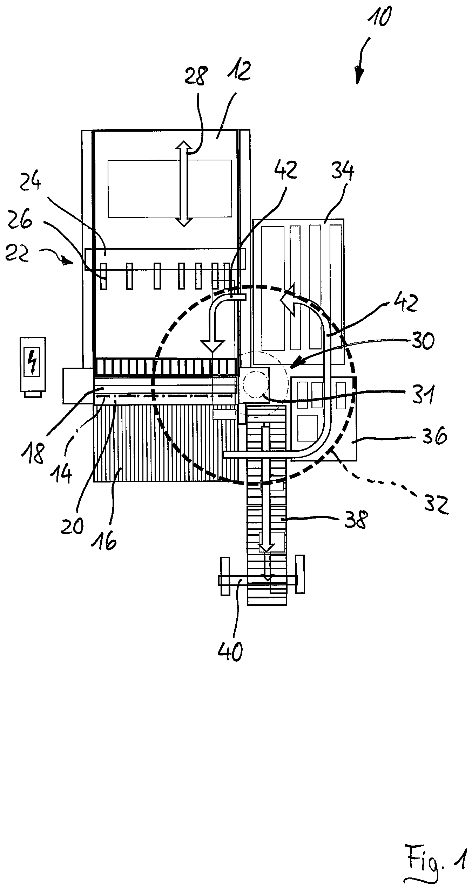

Nachfolgend werden mögliche Ausführungsformen einer erfindungsgemäßen Plattenaufteilanlage und eines Verfahrens zum Aufteilen von plattenförmigen Werkstücken mittels einer Plattenaufteilanlage unter Bezugnahme auf die Figuren 1 bis 26 erläutert, bei denen die jeweilige Plattenaufteilanlage schematisch und in einer Draufsicht gezeigt ist und bei denen Verfahrensabläufe schematisch mittels Flussdiagrammen dargestellt sind. Dabei tragen solche Elemente und Bereiche, welche äquivalente Funktionen haben, in allen Figuren die gleichen Bezugszeichen. Sie werden darüber hinaus dann, wenn sie bereits im Zusammenhang mit einer vorhergehenden Figur genannt wurden, in den nachfolgenden Figuren nicht nochmals im Detail erläutert.

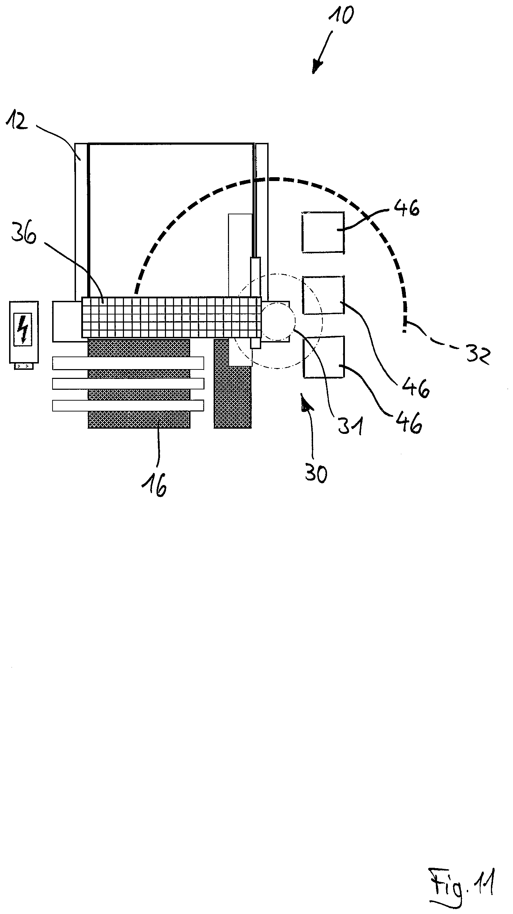

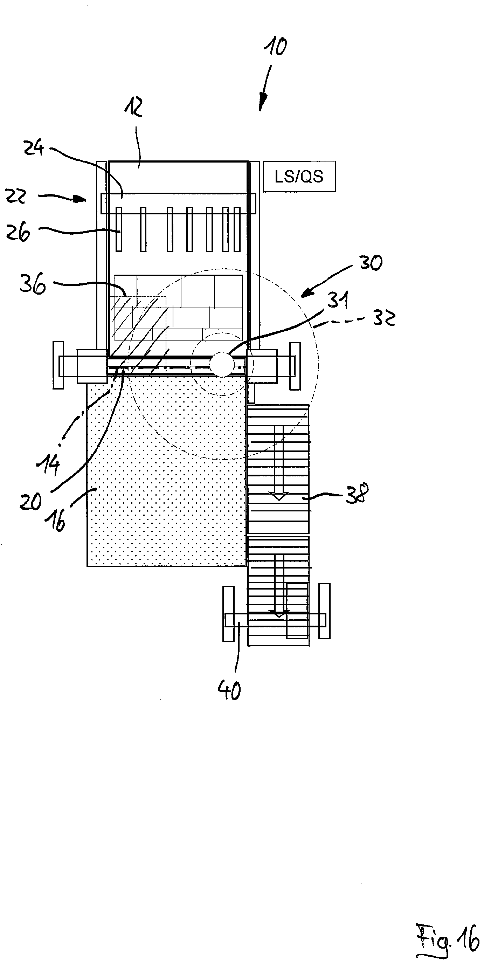

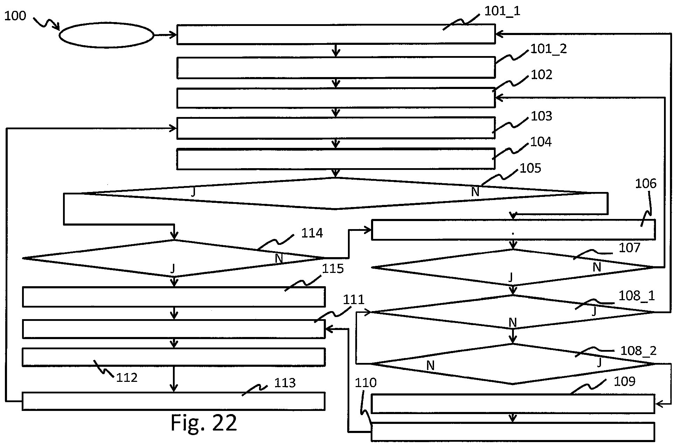

Die Figuren 11 und 16 zeigen Ausführungsformen einer Plattenaufteilanlage gemäß der vorliegenden Erfindung. Die Figuren 1 bis 10, 12 bis 15 und 17 bis 21 zeigen Ausführungsformen, die nicht gemäß der vorliegenden Erfindung sind, aber die bevorzugte Weiterbildungen der vorliegenden Erfindung erläutern. Die Figuren 22 bis 26 erläutern bevorzugte Weiterbildungen des Verfahrens nach der vorliegenden Erfindung.

In Figur 1 trägt eine nicht erfindungsgemäße Plattenaufteilanlage insgesamt das Bezugszeichen 10. Sie umfasst einen aus mehreren Rollenschienen gebildeten ersten Zuführtisch 12, eine vorliegend als Säge ausgebildete Aufteileinrichtung (nicht sichtbar) mit einer ersten Aufteillinie 14 ("Sägelinie"), und einen ebenfalls aus mehreren Rollenschienen gebildeten ersten Entnahmetisch 16. Alternativ kann es sich beim ersten Entnahmetisch 16 auch um einen Luftkissentisch, einen Tisch mit Rollenbahnen, einen Riemenförderer oder um ein Transportband handeln.

Die eigentliche erste Aufteillinie 14 ist in Figur 1 durch einen Druckbalken 18 verdeckt und in Figur 1 daher lediglich durch eine strichpunktierte Linie angedeutet. Die Aufteillinie 14 wird durch einen Spalt in einem Maschinentisch 20 gebildet, der zwischen dem Zuführtisch 12 und dem Entnahmetisch 16 angeordnet ist. Durch diesen Spalt kann ein Sägeblatt nach oben auftauchen und längs zur Aufteillinie 14 bewegt werden.

Zu der Plattenaufteilanlage 10 gehört ferner eine erste Fördereinrichtung 22, die vorliegend einen an seitlichen Schienen (ohne Bezugszeichen) verfahrbar gehaltenen Programmschieber 24 umfasst, an dem eine Mehrzahl von Spannzangen 26 befestigt ist, von denen aus Gründen der Übersichtlichkeit jedoch nur eine mit einem Bezugszeichen versehen ist. Mittels der ersten Fördereinrichtung 22 kann ein auf dem Zuführtisch 12 liegendes Werkstück in Richtung zur Aufteillinie 14 und auch entgegen dieser Richtung längs zu einer durch einen Doppelpfeil 28 bezeichneten Förderrichtung in an sich bekannter Weise bewegt werden.

Ebenfalls vorhanden sind zwei Ausrichteinrichtungen, mit der ein auf dem Zuführtisch 12 liegendes Werkstück in Richtung der ersten Förderrichtung 28, also längs, und seitlich hierzu, also quer, ausgerichtet werden kann. Zu der Längs-Ausrichteinrichtung gehören nach oben ausfahrbare Ausrichtanschläge, die parallel zur Aufteillinie 14 angeordnet sind und eine Ausrichtung des Werkstücks in Richtung der ersten Förderrichtung 28 ermöglichen. mit der Quer-Ausrichteinrichtung, die an der Schnittlinie 14 angeordnet ist, kann ein auf dem Zuführtisch 12 liegendes Werkstück gegen ein seitliches Winkellineal gedrückt werden kann, welches den Zuführtisch 12 zur Seite hin begrenzt und exakt orthogonal zur Aufteillinie 14 angeordnet ist, und wodurch es zur Seite hin ausgerichtet wird. Mittels einer hier nicht näher gezeigten Ausschubvorrichtung wird das zuletzt bearbeitete Werkstück auf den Entnahmetisch 14 geschoben.

Die Plattenaufteilanlage 10 umfasst ferner eine Handhabungseinrichtung 30, die vorliegend durch einen nicht näher dargestellten Roboter gebildet wird, der eine Basis 31 und einen an der Basis 31 gelenkig befestigten, gegenüber der Basis 31 um eine Mehrzahl von Achsen motorisch schwenk- und drehbaren und eine Mehrzahl von Segmenten aufweisenden Roboterarm umfasst. An einem abragenden Ende des Roboterarms ist eine plattenförmige und im Wesentlichen horizontale Saug-Greifeinrichtung, die ebenfalls in der Figur nicht gezeigt ist, vorhanden. Die Saug-Greifeinrichtung ist relativ zum Roboterarm ebenfalls um eine vertikale Achse motorisch drehbar gelagert. Die Saug-Greifeinrichtung ist als plattenförmige Fachwerkkonstruktion ausgebildet und weist auf ihrer Unterseite eine Vielzahl von einzelnen pneumatischen Saugglocken auf, die an einer Oberseite eines plattenförmigen Werkstücks angreifen können.

In Figur 1 ist ein Arbeitsbereich des Roboters 30 als gestrichelt gezeichneter Kreis 32 dargestellt. Unter dem Arbeitsbereich 32 wird jener Bereich verstanden, in dem dort vorhandene Werkstücke vom Roboter 30 ergriffen und/oder abgelegt und/oder transportiert werden können. Der Arbeitsbereich 32 ist also ein dreidimensionaler Raumbereich, der näherungsweise die Form einer Halbkugel hat, in deren Zentrum ein Gelenk ist, welches den Roboterarm mit der Basis 31 verbindet.

Die Plattenaufteilanlage 10 umfasst ferner seitlich vom Zuführtisch 10 ein aktives Zwischenlager 34, und seitlich von der Aufteillinie 14 und vom Entnahmetisch 16 ein passives Zwischenlager 36. Dabei bedeutet das Adjektiv "aktiv" beim aktiven Zwischenlager 34, dass es sich um ein solches Zwischenlager handelt, dem eine eigene Zwischenlager-Fördereinrichtung zugeordnet ist. Hierbei kann es sich beispielsweise um einen heb- und senkbaren angetriebenen Rollen- oder Riemenförderer handeln.

Vorliegend ermöglicht die Zwischenlager-Fördereinrichtung, dass auf dem aktiven Zwischenlager 34 zwischengelagerte Werkstücke durch diese Zwischenlager-Fördereinrichtung vom aktiven Zwischenlager 34 auf den Zuführtisch 12, also quer zur ersten Förderrichtung 28, transportiert werden können. Gegebenenfalls können auf dem aktiven Zwischenlager 34 abgelegte Werkstücke auch entgegen der eben bezeichneten Förderrichtung bewegt werden. Das Adjektiv "passiv" beim passiven Zwischenlager 36 bedeutet dagegen, dass es sich um eine reine Ablagefläche ohne eine solche spezielle zugeordnete Fördereinrichtung handelt.

Außerdem umfasst die Plattenaufteilanlage 10 eine Abtransporteinrichtung in Form einer Rollenbahn 38, bei der außerdem noch eine Etikettiereinrichtung 40 vorhanden ist. Die Abtransporteinrichtung 38 ist vorliegend seitlich vom Entnahmetisch 16 angeordnet, in der Draufsicht der Figur 1 also "südlich" vom Roboter 30. Mittels der Abtransporteinrichtung 38 können fertig bearbeitete Werkstücke abtransportiert werden. Mittels der Etikettiereinrichtung 40 können Informationen auf ein Werkstück aufgebracht werden.

Man erkennt aus Figur 1, dass der Arbeitsbereich 32 des Roboters 30 in der Draufsicht einen Teil des Zuführtisches 12, einen Teil des Entnahmetisches 16, einen Teil des passiven Zwischenlagers 36 und einen Teil des aktiven Zwischenlagers 34 überdeckt. Somit kann durch den Roboter 30 ein Materialfluss realisiert werden, wie er beispielhaft durch die Pfeile 42 angedeutet ist. Ein von der Aufteileinrichtung bearbeitetes bzw. abgetrenntes Werkstück kann vom Roboter 30 genommen und entweder direkt wieder auf den Zuführtisch 12 gelegt werden, um dann von der ersten Fördereinrichtung 22 ergriffen und der Aufteillinie 14 für eine weitere Bearbeitung zugeführt zu werden, oder kann vom Roboter 30 auf dem aktiven Zwischenlager 34 oder dem passiven Zwischenlager 36 für eine Zwischenlagerung abgelegt werden. Da der Arbeitsbereich 32 ferner einen Teil der Abtransporteinrichtung 38 überdeckt, kann ein fertig bearbeitetes Werkstück vom Roboter 30 auch auf der Abtransporteinrichtung 38 abgelegt werden.

Auf diese Weise können in der Plattenaufteilanlage 10 großformatige Werkstücke mittels eines ersten Sägeschnitts (Längsschnitt) aufgeteilt werden, und das aufgeteilte Werkstück kann dann vom Roboter 30 um eine vertikale Achse um 90° gedreht werden und der Aufteileinrichtung für einen zweiten Sägeschnitt (Querschnitt) zugeführt werden. Das so abgetrennte Werkstück kann dann vom Roboter 30 gegebenenfalls nochmals um eine vertikale Achse gedreht und der Aufteileinrichtung für einen dritten Sägeschnitt (Nachschnitt) zugeführt werden. Somit sind beinahe beliebige Schnittmuster an einem Ausgangswerkstück realisierbar.
Zwar nicht durch einen Pfeil dargestellt, aber grundsätzlich möglich ist auch, dass zuletzt aufgeteilte Werkstücke oder sich in dem aktiven Zwischenlager 34 oder dem passiven Zwischenlager 36 befindliche Werkstücke für eine nächste Aufteilung vom ersten Entnahmetisch 16 her mittels des Roboters 30 durch den Spalt zwischen der ersten Aufteillinie 14 und dem Druckbalken 18 den Spannzangen 26 der ersten Fördereinrichtung 22 zugeführt werden ("Frontladerprinzip"). Dabei ist es möglich, dass ein Werkstück vom aktiven Zwischenlager 34 zum Entnahmetisch 16 hin längs einer Verlagerungsbahn transportiert wird, die über Aufbauten der Plattenaufteilanlage 10, vorliegend beispielsweise über die Andrückeinrichtung 18, hinweg führt. Während dieses Transports kann das Werkstück in einer gewünschten Art und Weise orientiert werden, beispielsweise um 90° gedreht werden.

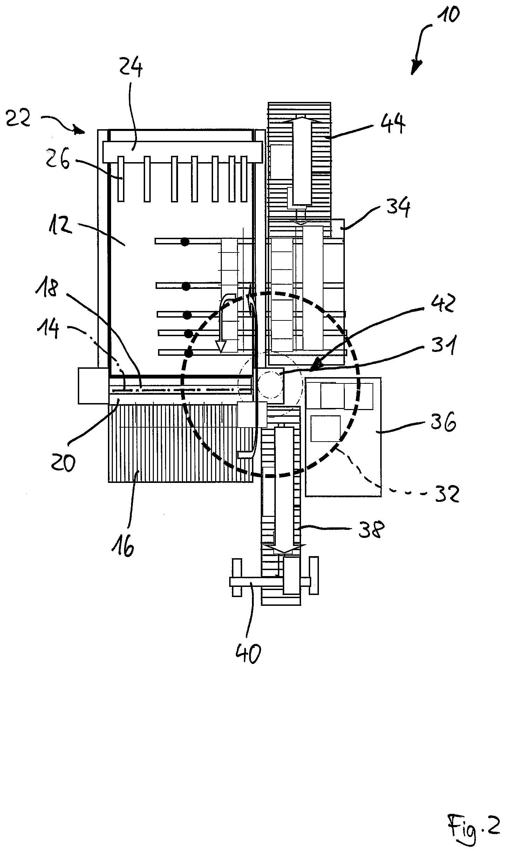

Bei der in Figur 2 gezeigten nicht erfindungsgemäßen Plattenaufteilanlage 10 ist zusätzlich noch eine Rückfördereinrichtung 44 vorhanden, mit der bei der Bearbeitung entstandene Rest-Werkstücke in ein Lager (nicht dargestellt) zurück gefördert werden können. Bei der Rückfördereinrichtung 44 kann es sich beispielsweise um einen angetriebenen Rollenförderer handeln. Die Rückfördereinrichtung 44 ist vorliegend in Figur 2 oberhalb vom aktiven Zwischenlager 34 angeordnet. Rest-Werkstücke gelangen auf sie, indem beispielsweise das aktive Zwischenlager 34 auch eine Fördermöglichkeit zur Rückfördereinrichtung 44 hin bereitstellt.

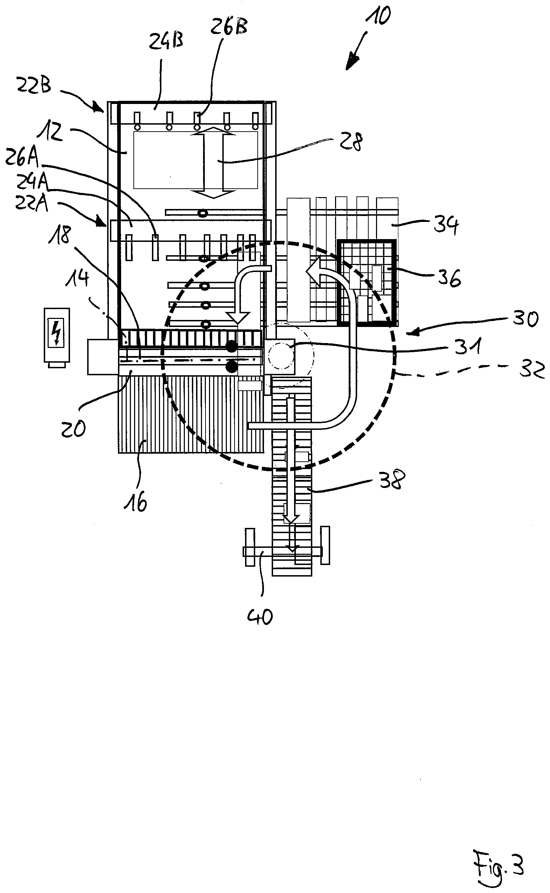

Bei der in Figur 3 gezeigten nicht erfindungsgemäßen Plattenaufteilanlage 10 ist das passive Zwischenlager 36 oberhalb vom aktiven Zwischenlager 34 angeordnet, jedoch deutlich kleiner als das aktive Zwischenlager 34, so dass es in der dargestellten Draufsicht nur den rechten unteren Quadranten des aktiven Zwischenlagers 34 verdeckt. Darüber hinaus sind bei der in Figur 3 gezeigten Plattenaufteilanlage 10 zwei erste Fördereinrichtungen 22 A und 22 B mit Programmschieber 24 A und 24 B sowie Spannzangen 26 A und 26 B vorhanden. Mit der zweiten ersten Fördereinrichtung 22 B kann ebenfalls ein auf dem ersten Zuführtisch 12 liegendes Werkstück in Richtung zur ersten Aufteillinie 14 hin bewegt werden. Somit kann ein von hinten auf den ersten Zuführtisch 12 aufgeschobenes Ausgangswerkstück von der zweiten ersten Fördereinrichtung 22 B in Richtung zur Aufteillinie 14 hin bewegt werden, während die erste Fördereinrichtung 22 A ein gerade von der Aufteileinrichtung bearbeitetes Werkstück hält.

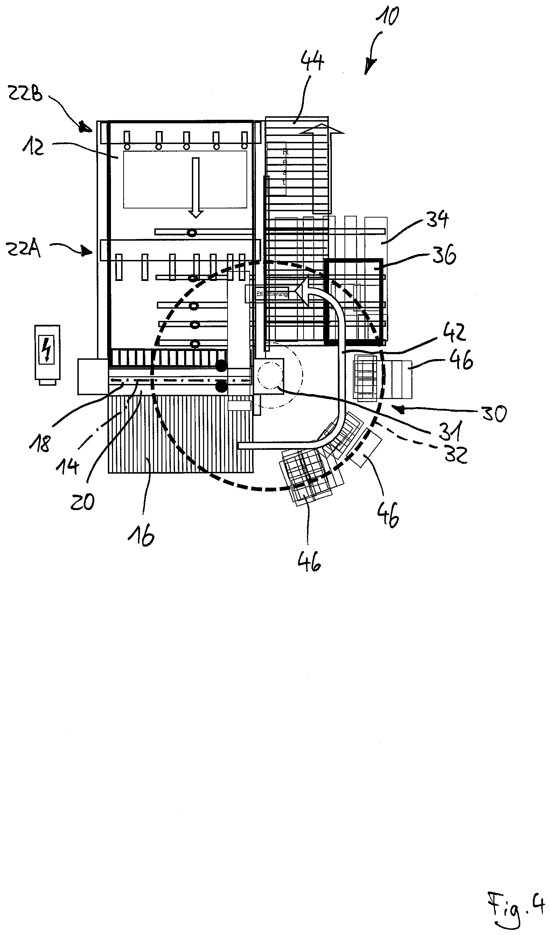

Bei der in Figur 4 gezeigten nicht erfindungsgemäßen Plattenaufteilanlage 10 sind zusätzlich mehrere Abstapelbereiche 46 gezeigt, die zur Basis 31 des Roboters 30 in etwa radial und nebeneinander ungefähr auf einer Kreisbahn ausgerichtet sind, und die vom Arbeitsbereich 32 des Roboters 30 in der Draufsicht zumindest zum Teil überdeckt werden. Bei den Abstapelbereichen 46 kann es sich beispielsweise um Hubpaletten handeln. Eine Abtransporteinrichtung ist bei der in Figur 4 gezeigten Plattenaufteilanlage 10 dagegen nicht vorhanden. Der Roboter 30 kann somit auch zum Abstapeln der bearbeiteten Werkstücke auf den Abstapelbereichen 46 eingesetzt werden.

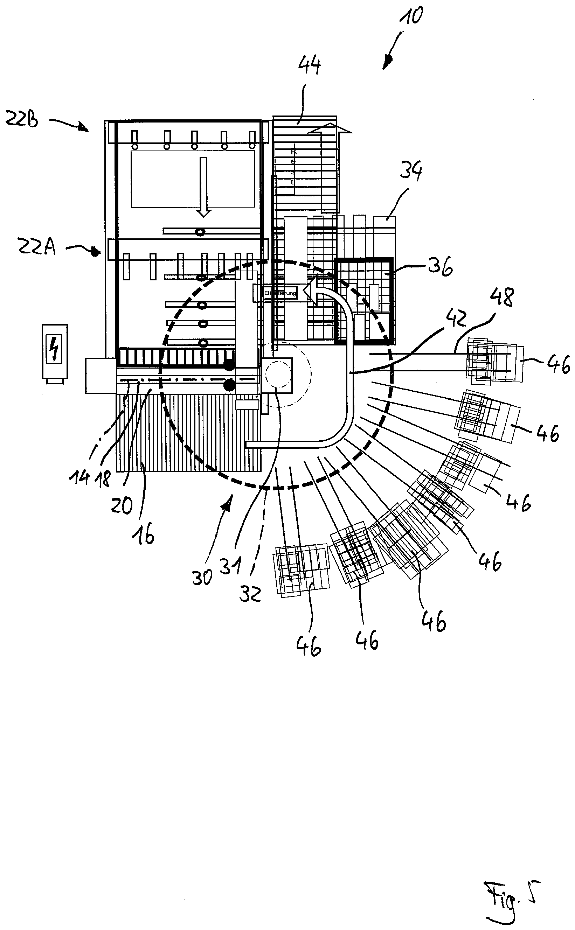

Bei der in Figur 5 gezeigten nicht erfindungsgemäßen Plattenaufteilanlage 10 sind die Abstapelbereiche 46 in einer Richtung radial zur Basis 31 des Roboters 30 auf Schienen 48 motorisch beweglich, wobei auch eine manuelle Bewegbarkeit der Abstapelbereiche 46 möglich ist. Im Betrieb wird dann der jeweils gerade zu beladende Abstapelbereich 46 radial nach innen in den Arbeitsbereich 32 des Roboters 30 verfahren. Auf diese Weise können mehr Abstapelbereiche 46 vorgesehen werden als eigentlich im Arbeitsbereich 32 des Roboters 30 gleichzeitig Platz haben.

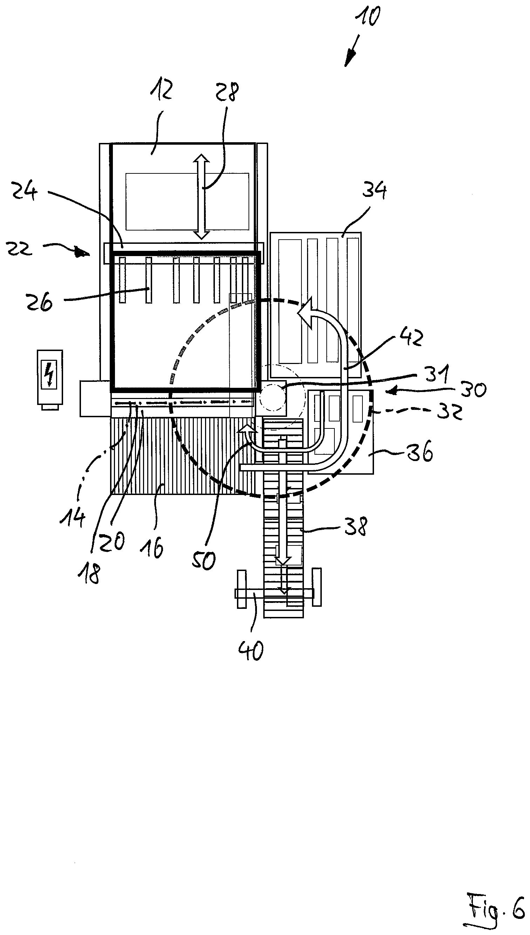

Die in Figur 6 nicht erfindungsgemäße Plattenaufteilanlage 10 ist ganz ähnlich zu jener von Figur 1. Allerdings sind die Spannzangen 26 am Programmschieber 24 der ersten Fördereinrichtung 22 in Richtung zum Entnahmetisch 16 verlängert ausgeführt. Deren Länge ist so bemessen, dass sie bis auf den Entnahmetisch 16 reichen, wenn der Programmschieber 24 sich in einer zum ersten Entnahmetisch 16 nächstliegenden Endstellung befindet. Somit können letzte Werkstücke in dem aufgeteilten Streifen auch vom ersten Entnahmetisch 16 her durch einen Spalt zwischen der ersten Aufteillinie 14 und dem Druckbalken 18 den Spannzangen 26 der ersten Fördereinrichtung 22 zugeführt werden. Es wird also mit einer solchen Länge der Spannzangen ermöglicht, dass der Roboter 30 ein Werkstück bei einer Durchführung durch den Spalt dem Programmschieber 24 übergeben kann. Vor allem bei dieser Anlage ist also auch ein Materialfluss realisierbar, der entgegen dem Materialfluss 42 verläuft, nämlich in Richtung eines in Figur 6 gezeichneten Pfeils 50 ("Frontladerprinzip"). Bei dieser Plattenaufteilanlage 10 kann im Übrigen die Rückförderung von Rest-Werkstücken durch den Programmschieber 24 der ersten Fördereinrichtung 22 erfolgen.

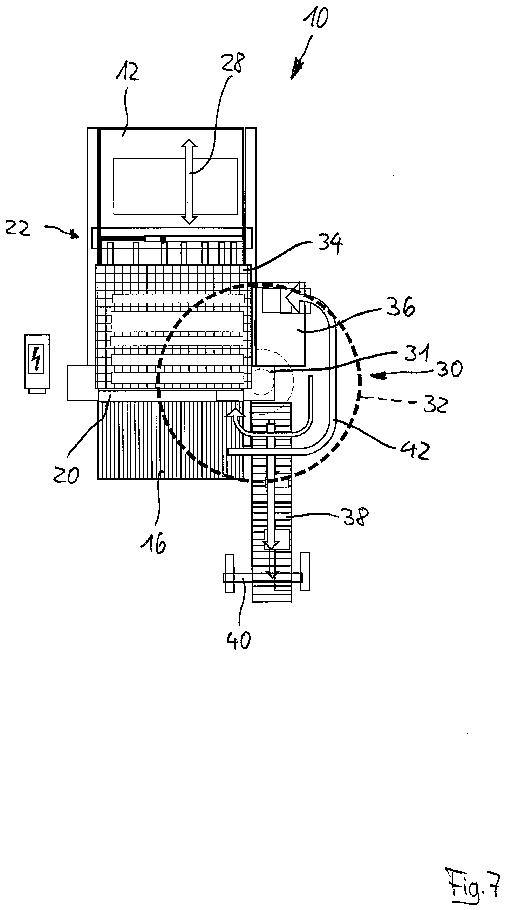

Die in Figur 7 gezeigte nicht erfindungsgemäße Plattenaufteilanlage 10 ist wiederum ganz ähnlich zu jener von Figur 6. Allerdings ist das aktive Zwischenlager 34 oberhalb vom Zuführtisch 12 und oberhalb von der Aufteillinie 14 angeordnet. Der Transport von auf dem aktiven Zwischenlager 34 abgelegten Werkstücken auf den Zuführtisch 12 muss also durch den Roboter 30 erfolgen.

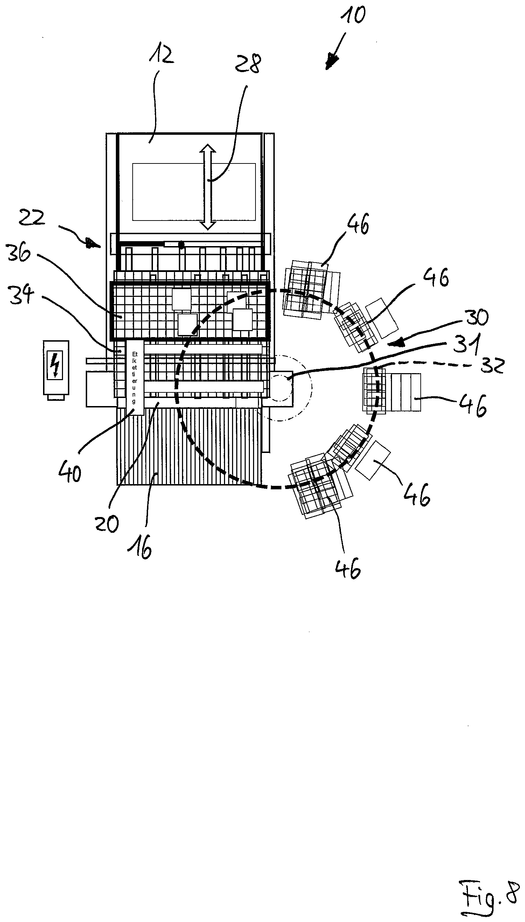

Bei der in Figur 8 gezeigten nicht erfindungsgemäßen Plattenaufteilanlage 10 werden verschiedene Aspekte von zuvor beschriebenen Ausführungsformen kombiniert. So umfasst diese Plattenaufteilanlage 10 sowohl ein aktives Zwischenlager 34 als auch ein passives Zwischenlager 36. Diese sind jedoch nicht seitlich, sondern oberhalb von der Aufteileinrichtung bzw. der Aufteillinie 14 und oberhalb vom Zuführtisch 12 angeordnet. In einer ersten Ebene oberhalb vom Zuführtisch 12 und von der Aufteillinie 14 ist das aktive Zwischenlager 34 angeordnet, und in einer zweiten Ebene oberhalb von dem aktiven Zwischenlager 34 ist das passive Zwischenlager 36 angeordnet. Für die Abstapelbereiche 46 stehen so zwei volle Quadranten des Arbeitsbereichs 32 zur Verfügung. Im Übrigen ist bei den beiden Zwischenlagern 34 und 36 auch die Etikettiereinrichtung 40 angeordnet. Wenn gewünscht, können auch hier zuletzt aufgeteilte Werkstücke oder sich in dem aktiven Zwischenlager 34 oder dem passiven Zwischenlager 36 befindliche Werkstücke für eine nächste Aufteilung vom ersten Entnahmetisch 16 her mittels des Roboters 30 durch den Spalt zwischen der ersten Aufteillinie 14 und dem Druckbalken 18 den Spannzangen 26 der ersten Fördereinrichtung 22 zugeführt werden.

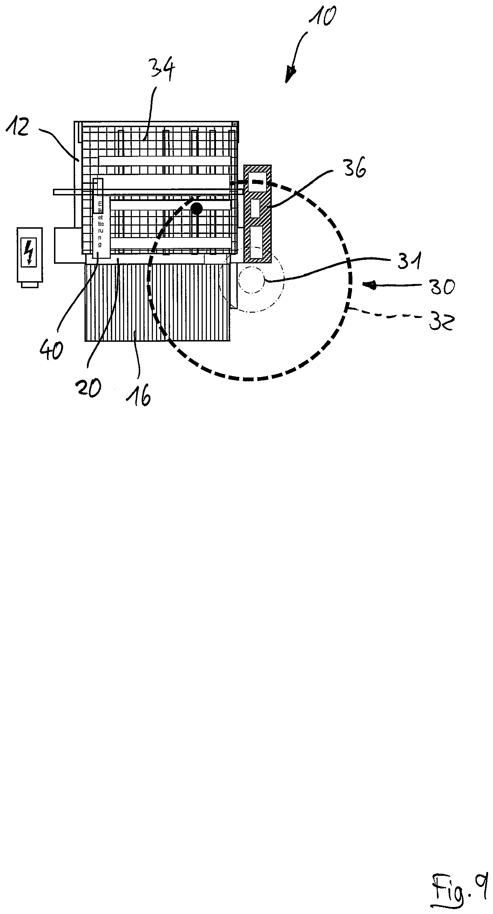

Die in Figur 9 gezeigte nicht erfindungsgemäße Ausführungsform einer Plattenaufteilanlage 10 ist besonders kompakt und wird daher auch als "Kompaktzelle" bezeichnet. Bei ihr sind die aus Figur 6 bekannten verlängerten Spannzangen vorhanden, was allerdings bei der Darstellung von Figur 9 durch das oberhalb vom Zuführtisch 12 angeordnete aktive Zwischenlager 34 verdeckt ist. Der Zuführtisch 12 ist in Richtung der ersten Förderrichtung 28 gesehen im Vergleich zu den vorhergehenden Ausführungsformen deutlich verkürzt ausgeführt. Das aktive Zwischenlager 34 ist oberhalb vom Zuführtisch 12 und von der Aufteillinie 14 angeordnet, wohingegen das passive Zwischenlager 6 und der Roboter 30 seitlich von der Aufteillinie 14 und vom Zuführtisch 12 angeordnet ist. Die Basis 31 des Roboters 30 ist im Vergleich zu den vorhergehenden Ausführungsformen in der Draufsicht etwas nach unten verschoben, also nicht mehr direkt seitlich von der Aufteillinie 14, sondern seitlich vom Entnahmetisch 16. Oberhalb vom aktiven Zwischenlager 34 ist im Übrigen wieder eine Etikettiereinrichtung 40 vorhanden. Wenn gewünscht, können auch hier zuletzt aufgeteilte Werkstücke oder sich in dem aktiven Zwischenlager 34 oder dem passiven Zwischenlager 36 befindliche Werkstücke für eine nächste Aufteilung vom ersten Entnahmetisch 16 her mittels des Roboters 30 durch den Spalt zwischen der ersten Aufteillinie 14 und dem Druckbalken 18 den Spannzangen 26 der ersten Fördereinrichtung 22 zugeführt werden.

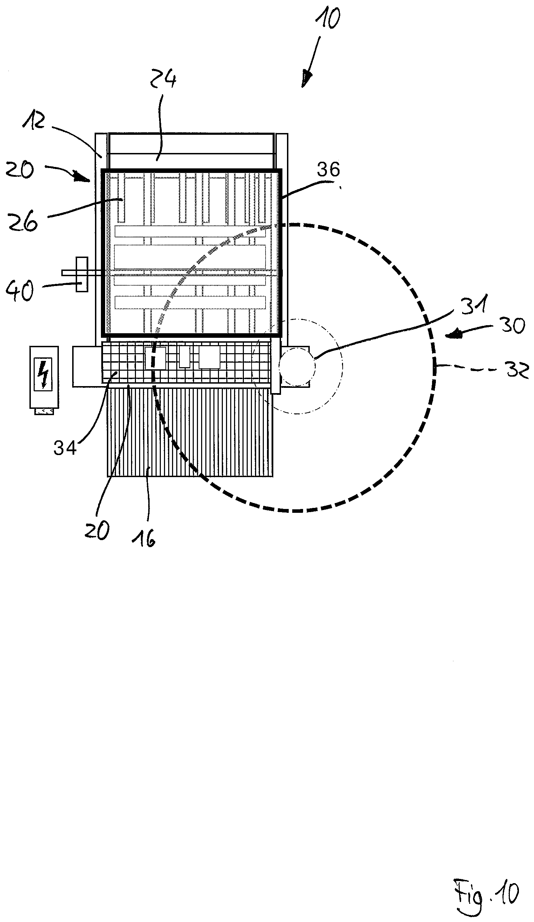

Bei der in Figur 10 gezeigten nicht erfindungsgemäßen Plattenaufteilanlage 10 ist ähnlich wie bei jener von Figur 9 wieder ein relativ "kurzer" Zuführtisch 12 sowie ein Programmschieber 24 mit langen Spannzangen 26 vorhanden. Das aktive Zwischenlager 34 ist oberhalb von der Aufteillinie 14 angeordnet, wohingegen das passive Zwischenlager 36 oberhalb vom Zuführtisch 12 angeordnet ist. Auch die Etikettiereinrichtung 40 ist im Bereich des passiven Zwischenlagers 36 angeordnet. Die Basis 31 des Roboters 30 befindet sich wieder seitlich von der Aufteillinie 14. Wenn gewünscht, können auch hier zuletzt aufgeteilte Werkstücke oder sich in dem aktiven Zwischenlager 34 oder dem passiven Zwischenlager 36 befindliche Werkstücke für eine nächste Aufteilung vom ersten Entnahmetisch 16 her mittels des Roboters 30 durch den Spalt zwischen der ersten Aufteillinie 14 und dem Druckbalken 18 den Spannzangen 26 der ersten Fördereinrichtung 22 zugeführt werden.

Bei der Plattenaufteilanlage von Figur 11 ist gemäß der vorliegenden Erfindung oberhalb von der Aufteillinie 14 ein passives Zwischenlager 36 vorgesehen. Die erste Fördereinrichtung ist selbstverständlich vorhanden, jedoch aus Gründen der Übersichtlichkeit nicht gezeichnet. Diese Variante kann insbesondere bei bestehenden Plattenaufteilanlagen 10 nachgerüstet werden.

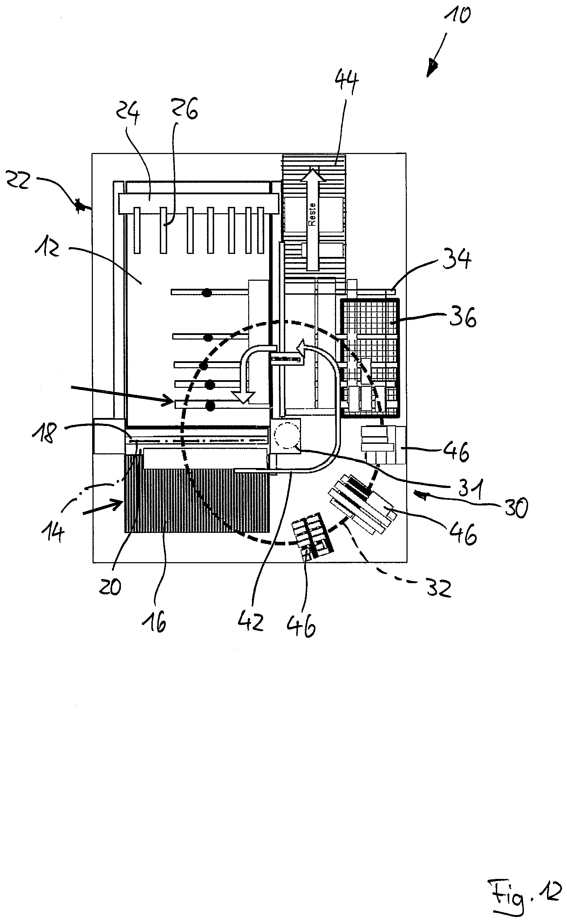

Wiederum eine gewisse Ähnlichkeit zur Ausführungsform von Figur 2 weist die nicht erfindungsgemäße Plattenaufteilanlage 10 von Figur 12 auf. Allerdings ist das passive Zwischenlager 36 oberhalb eines Teils des aktiven Zwischenlagers 34 angeordnet, wodurch Platz geschaffen wird für Abstapelbereiche 46.

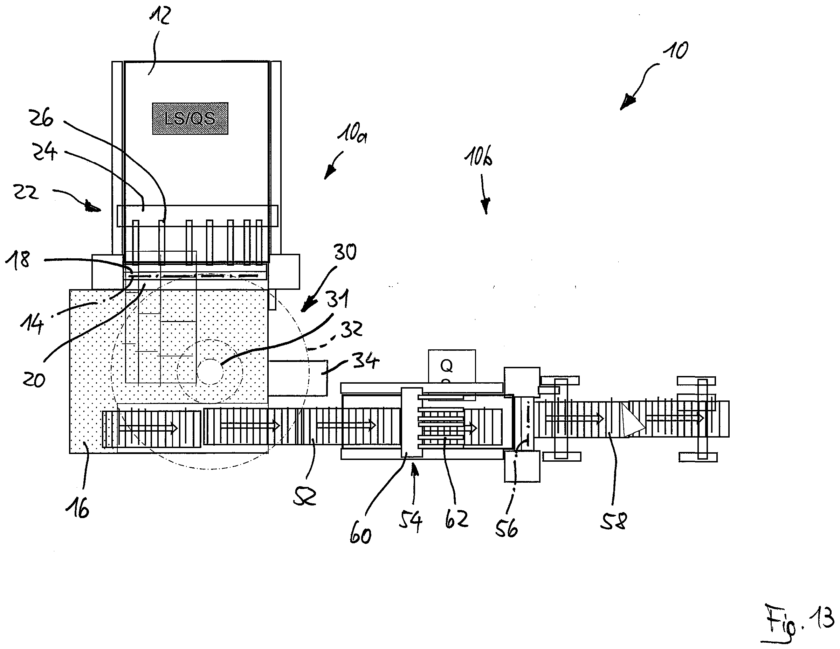

Figur 13 zeigt eine sogenannte "Winkelanlage". Bei einer solchen sind ein zweiter Zuführtisch 52 mit einer diesem zugeordneten zweiten Fördereinrichtung 54, eine zweite Aufteileinrichtung mit einer zweiten Aufteillinie 56 und ein zweiter Entnahmetisch 58 vorhanden. Die zweite Aufteillinie 56 steht in einem Winkel von 90° zur ersten Aufteillinie 14. es sind also zwei Teil-Plattenaufteilanlagen 10a und 10b vorhanden.

Der zweite Zuführtisch 52 ist als Rollenbahn ausgeführt und beginnt in einer Ausnehmung des ersten Entnahmetisches 16, die zweite Fördereinrichtung 54 weist wiederum einen Programmschieber 60 mit Spannzangen 62 auf. Die Basis 31 des Roboters 30 ist im Bereich des ersten Entnahmetisches 16 angeordnet. Dabei überdeckt der Arbeitsbereich 32 des Roboters 30 in der Draufsicht einen Bereich des ersten Entnahmetisches 16 und einen Bereich des zweiten Zuführtisches 52.

Bei einer solchen Winkelanlage wird die erste Aufteileinrichtung auch als Längssäge bezeichnet, wohingegen die zweite Aufteileinrichtung als Quersäge bezeichnet wird. Die ersten und die zweiten Schnitte werden bei einer solchen Anlage in der Längssäge ausgeführt, wohingegen die Nachschnitte in der Quersäge ausgeführt werden. Durch den Roboter 30 werden die von der Längssäge fertig bearbeiteten Werkstücke auf den zweiten Zuführtisch 52 der Quersäge übergeben.

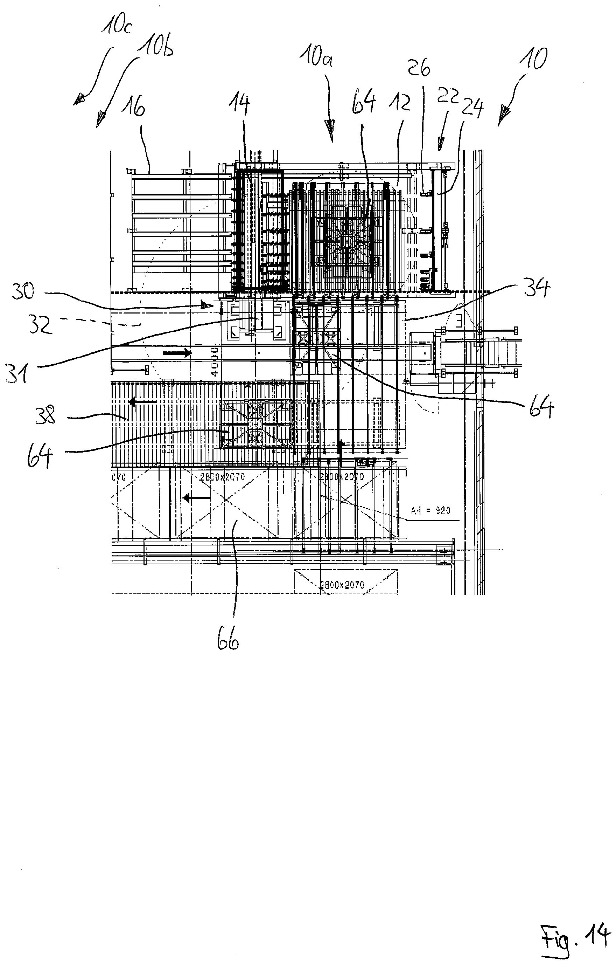

Figur 14 zeigt eine Plattenaufteilanlage 10 mit vorliegend drei parallel zueinander angeordneten Teil-Plattenaufteilanlagen, wobei aus Gründen der Übersichtlichkeit nur eine Teil-Plattenaufteilanlage 10a dargestellt ist. Die weiteren Teil-Plattenaufteilanlagen 10b und 10c sind links davon vorhanden und durch entsprechende Pfeile angedeutet. Man erkennt das aktive Zwischenlager 34, den Zuführtisch 12, die Aufteillinie 14 und den Entnahmetisch 16, die alle in der gleichen vertikalen Ebene angeordnet sind. Auch der Roboter 30 ist erkennbar, mit seiner Basis 31 und der in dieser Figur in verschiedenen Positionen dargestellten Saug-Greifeinrichtung 64.

In einer Ebene oberhalb von der gerade erwähnten vertikalen Ebene ist eine Abtransporteinrichtung 38 in Form einer Rollenbahn vorhanden, und ebenfalls in einer Ebene oberhalb von der besagten vertikalen Ebene und außerhalb der Ebene der Abtransporteinrichtung 38 ist eine Fördereinrichtung 66 angeordnet. Mittels der Fördereinrichtung 66 werden die Ausgangswerkstücke von einem nicht sichtbaren Lager herantransportiert, und zwar sowohl zu der gezeigten Teil-Plattenaufteilanlage 10a als auch zu den anderen nicht gezeigten Teil-Plattenaufteilanlagen 10b und 10c. Vom Förderband 66 gelangen die Ausgangswerkstücke auf das aktive Zwischenlager 34. Mittels der diesem zugeordneten eigenen Fördereinrichtung wird das Werkstück auf den Zuführtisch 12 bewegt. Es wird dann entschieden, ob das Werkstück noch vom Roboter 30 gedreht werden muss, oder ob das Werkstück sofort von der ersten Fördereinrichtung 22 ergriffen und der Aufteillinie 14 zugeführt werden kann. Entsprechend kann der Zuführtisch 12 wie bei bereits oben erwähnten Ausführungsbeispielen relativ kurz sein. Auch die Abtransporteinrichtung 38 wird von allen Teil-Plattenaufteilanlagen genutzt, um die fertig bearbeiteten Werkstücke sowie bei der Bearbeitung angefallene Rest-Werkstücke abzutransportieren. Daher liegt diese im Arbeitsbereich 38 des Roboters 30.

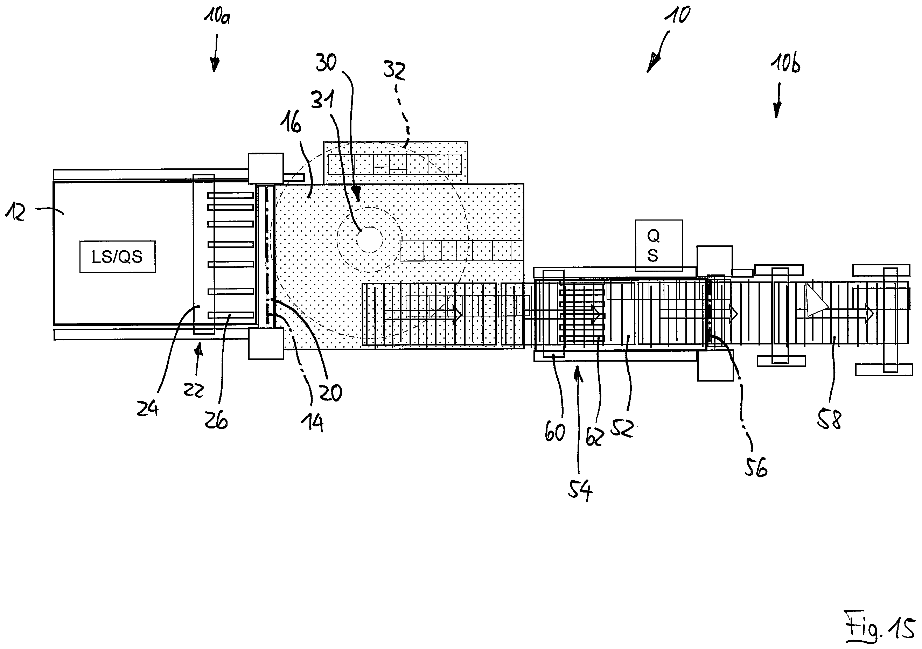

Figur 15 zeigt eine Plattenaufteilanlage 10, die an sich sehr ähnlich ist zu jener von Figur 13. Allerdings sind die erste Aufteillinie 14 und die zweite Aufteillinie 56 nicht in einem Winkel von 90°, sondern in einem Winkel von 0° zueinander angeordnet, also parallel zueinander. Um Schnittlinien realisieren zu können, die in einem Winkel von 90° zueinander stehen (beispielsweise Querschnitt zu Längsschnitt), muss der Roboter 30 das Werkstück bei der Übergabe von der Längssäge (erste Aufteillinie 14) zur Quersäge (zweite Aufteillinie 56) um 90° drehen.

Figur 16 beschreibt eine sehr einfache erfindungsgemäße Plattenaufteilanlage 10. Bei dieser ist lediglich ein passives Zwischenlager 36 vorhanden, welches oberhalb vom Druckbalken bzw. oberhalb von der Aufteillinie 14 angeordnet und relativ klein dimensioniert ist. Ferner ist bei der in Figur 16 gezeigten Plattenaufteilanlage 10 der Roboter 30 ebenfalls oberhalb von der Aufteillinie 14 und vom Druckbalken angeordnet. Auf diese Weise werden der Bereich des Entnahmetisches 16 und der Bereich des Zuführtisches 12, der vom Arbeitsbereich 32 des Roboters 30 überdeckt wird, vergrößert. Wiederum erkennt man, dass die Spannzangen 26 in Richtung zum Entnahmetisch 16 hin verlängert ausgeführt sind, so dass, wenn gewünscht, Werkstücke auch vom Entnahmetisch 16 her durch den Spalt zwischen Maschinentisch 20 und Druckbalken hindurch den Spannzangen 26 zugeführt werden können.

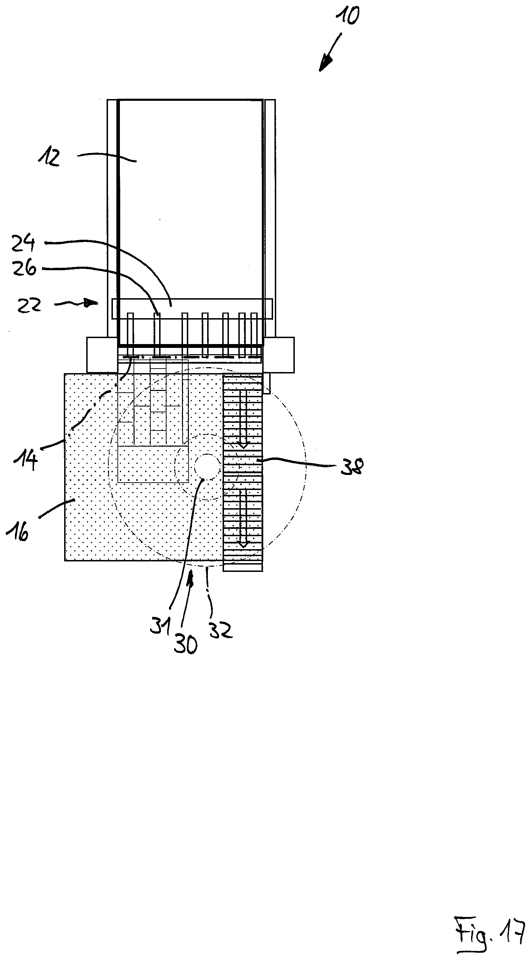

Bei der in Figur 17 gezeigten Plattenaufteilanlage 10 befindet sich die Basis 31 des Roboters 30 im Bereich des Entnahmetisches 10, ist also in diesen quasi integriert. Der Arbeitsbereich 32 des Roboters 30 überdeckt somit im Wesentlichen lediglich den Entnahmetisch 16 und die Abtransporteinrichtung 38. Vom Roboter 30 werden bei dieser Ausführungsform also vorwiegend Werkstücke gehandhabt, die auf dem Entnahmetisch 16 liegen bzw. auf die Abtransporteinrichtung 38 zu legen sind.

Insbesondere bei dieser Ausführungsform, aber auch bei allen anderen Ausführungsformen, kann die erste Fördereinrichtung 22 aus zwei Teil-Fördereinrichtungen bestehen, beispielsweise einem relativ breiten Programmschieber mit einer Mehrzahl von Spannzangen, wobei der Programmschieber fast die gesamte Breite des Zuführtisches 12 überdeckt, und einem kleinen, seitlich angebrachten und verfahrbaren Schlitten mit lediglich einer Spannzange, mit dem unabhängig von dem relativ breiten Programmschieber ein schmaler Streifen, der in Figur 17 am rechten Rand des Zuführtisches 12 liegt, bewegt werden kann. Dies ist auf dem Markt als sogenannte "PC-Technik" bekannt.

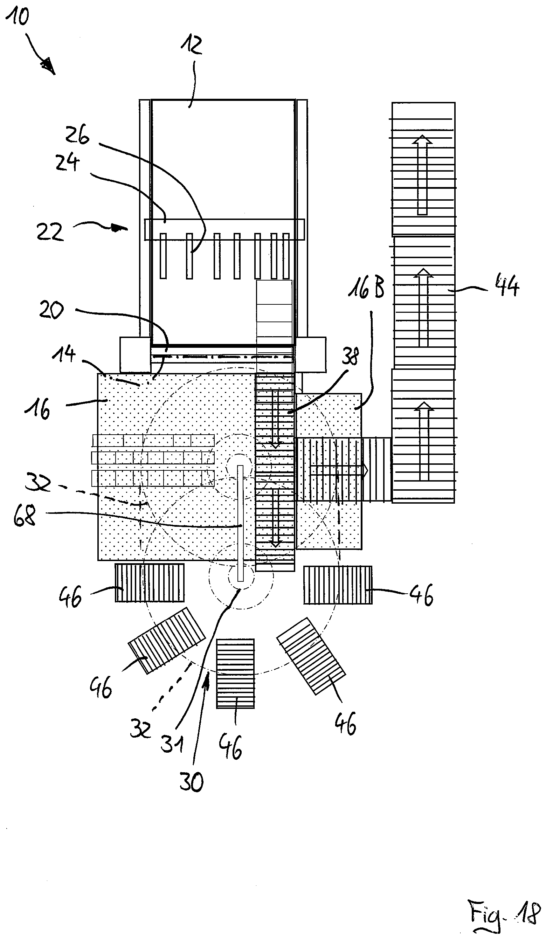

Eine weitere mögliche Ausgestaltung einer Plattenaufteilanlage 10 zeigt Figur 18. Bei dieser ist die Basis 31 des Roboters 30 in einer horizontalen Ebene verschieblich. Dies ist in Figur 18 durch einen möglichen Verschiebeweg 68 gekennzeichnet, und die entsprechenden Arbeitsbereiche 32 sind durch gestrichelt gezeichnete Kreise angedeutet. Man erkennt, dass in der in Figur 18 maximal unteren horizontalen Position der Basis 31 des Roboters 30 der Arbeitsbereich 32 noch einen Teil des Entnahmetisches 16, aber insbesondere fünf Abstapelbereiche 46 überdeckt, so dass der Roboter 30 in dieser Position zum Abstapeln von Werkstücken vom Entnahmetisch 16 zu den Abstapelbereichen 46 eingesetzt werden kann.

In der in Figur 18 maximal oberen Position befindet sich die Basis 31 im Wesentlichen in der Mitte des Entnahmetisches 16, so dass der Arbeitsbereich 32 einen Großteil des Entnahmetischs 16 überdeckt und bis zum Maschinentisch 20 reicht. In dieser Position des Roboters 30 kann dieser also beispielsweise bearbeitete Werkstücke abholen oder Werkstücke zur weiteren Bearbeitung wieder durch den Spalt zwischen Maschinentisch 20 und Druckbalken der ersten Fördereinrichtung 22 zuführen. Durch die horizontale Beweglichkeit der Basis 31 des Roboters 30 wird somit der Arbeitsbereich 32 vergrößert. Vorliegend hat er insgesamt in der Draufsicht die Form eines Ovals. Der Entnahmetisch 16 ist bei der in Figur 18 gezeigten Plattenaufteilanlage 10 so ausreichend groß dimensioniert, dass er auch als passives Zwischenlager für noch nicht fertig bearbeitete Werkstücke dienen kann.

Bei der in Figur 18 gezeigten Plattenaufteilanlage ist in den Entnahmetisch 16 auch ein sogenannter "Auslauf" integriert, bei dem es sich im Grunde um eine Abtransporteinrichtung 38 handelt, von der fertig bearbeitete Werkstücke vom Roboter 30 entnommen und auf die Abstapelbereiche 46 abgelagert werden können. Man erkennt in Figur 18 rechts vom eigentlichen Entnahmetisch 16, der vorliegend als Luftkissentisch ausgebildet ist, einen zusätzlichen Entnahmetisch 16 B, wobei die Grenzlinie zwischen dem eigentlichen Entnahmetisch 16 und dem zusätzlichen Entnahmetisch 16 B in Verlängerung des (nicht gezeigten) Winkellineals liegt. Mittels der durch einen Rollenförderer gebildeten Rückfördereinrichtung 44 können bei der Bearbeitung angefallene Rest-Werkstücke längs eines L-förmigen Wegs in ein Lager zurück gefördert werden.

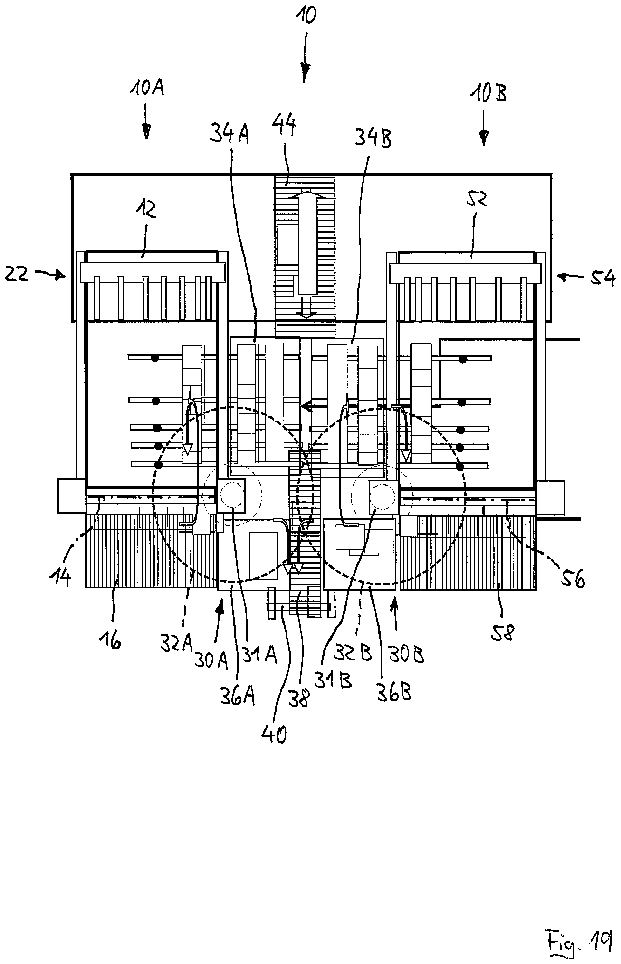

Die in Figur 19 gezeigte nicht erfindungsgemäße Plattenaufteilanlage 10 wiederum weist erste und zweite Zuführtische 12 und 52, eine erste und zweite Aufteillinie 14 und 56, einen ersten und einen zweiten Entnahmetisch 16 und 58 und eine erste und eine zweite Fördereinrichtung 22 und 54 auf. Durch die ersten und zweiten Komponenten werden zwei Teil-Plattenaufteilanlagen 10 A und 10 B geschaffen, die zu einer in Figur 19 vertikalen Linie spiegelsymmetrisch sind und jeweils einen Roboter aufweisen, wobei die beiden Roboter in Figur 19 mit 30 A und 30 B bezeichnet sind. Entsprechende Arbeitsbereiche tragen die Bezugszeichen 32 A und 32 B.

Ferner umfasst jede der Teil-Plattenaufteilanlagen ein aktives Zwischenlager 34 A und 34 B, die benachbart zueinander im Zentrum der Gesamt-Plattenaufteilanlage 10 angeordnet sind. Auf der Spiegel-Symmetrielinie sind ferner eine für beide Teil-Plattenaufteilanlagen 10 A und 10 B gemeinsame Rückfördereinrichtung 44 für bei der Bearbeitung angefallene Rest-Werkstücke sowie eine für beide Teil-Plattenaufteilanlagen 10 gemeinsame Abtransporteinrichtung 38 für fertig bearbeitete Werkstücke angeordnet.

Am Ende der Abtransporteinrichtung 38 ist eine Etikettiereinrichtung 40 vorhanden. Zu beiden Seiten der Abtransporteinrichtung 38 ist jeweils ein passives Zwischenlager 36 A und 36 B vorhanden.

Man erkennt, dass sich die Arbeitsbereiche 32 A und 32 B der Roboter 30 A und 30 B im Bereich der Spiegel-Symmetrielinie überlappen. Auch ist es möglich, dass mittels der den aktiven Zwischenlager 34 A und 34 B zugeordneten Fördereinrichtungen Werkstücke vom einen aktiven Zwischenlager auf das andere aktive Zwischenlager transportiert werden. Auf diese Weise wird eine sehr hohe Anlagenflexibilität erreicht, da Werkstücke beinahe beliebig zwischen den beiden Teil-Plattenaufteilanlagen 10 A und 10 B ausgetauscht werden können. Durch das Vorsehen von zwei im Grunde identischen Teil-Plattenaufteilanlagen 10 A und 10 B wird daher nicht nur eine Verdoppelung der Kapazität erreicht, sondern durch die erhöhte Flexibilität eine darüber hinaus gehende Effizienzsteigerung.

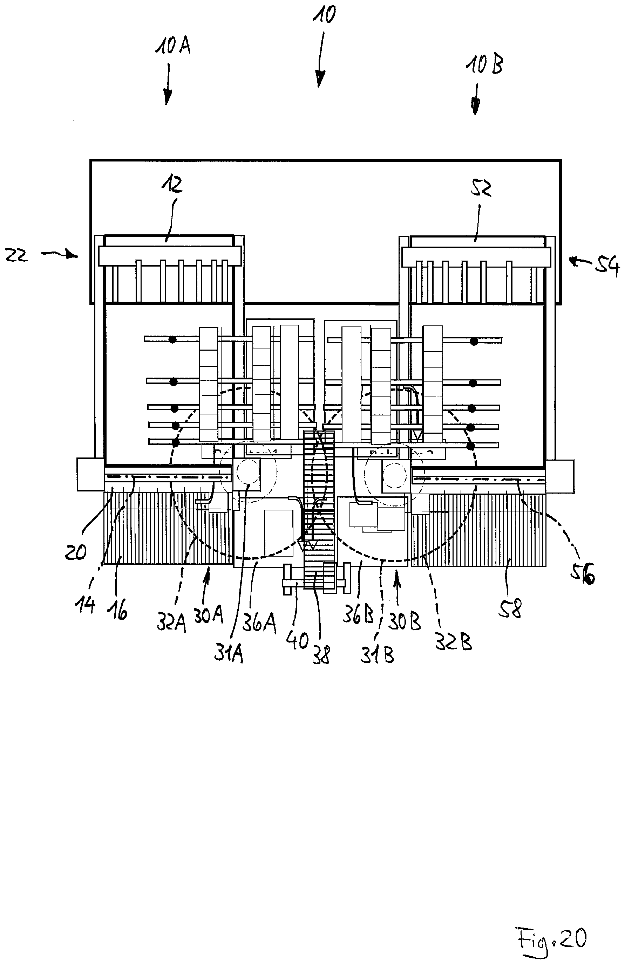

Die in Figur 20 gezeigte nicht erfindungsgemäße Plattenaufteilanlage 10 ist zu jener von Figur 19 sehr ähnlich. Bei ihr fehlt lediglich die Rückfördereinrichtung. Stattdessen ist dort, also im in Figur 20 oberen Bereich zwischen den beiden Teil-Plattenaufteilanlagen, ein normales Plattenlager vorgesehen.

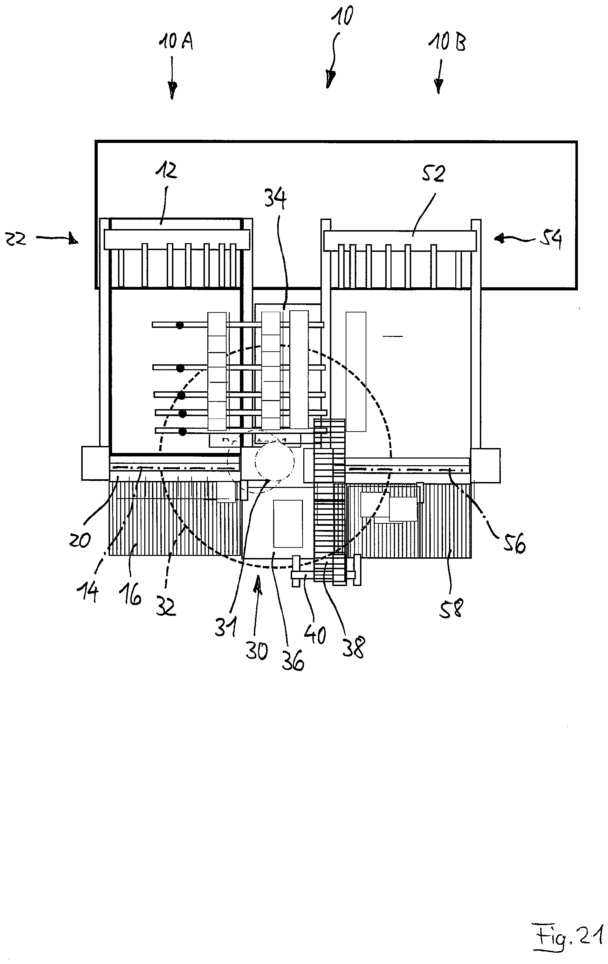

Figur 21 zeigt eine nicht erfindungsgemäße Plattenaufteilanlage 10, die wiederum zwei Teil-Plattenaufteilanlagen 10 A und 10 B aufweist. Allerdings verfügt nur die in Figur 21 linke Teil-Plattenaufteilanlage 10 A über ein aktives Zwischenlager 34, von dem Werkstücke somit lediglich auf den linken Zuführtisch 12 gefördert werden können. Zwischen den beiden Entnahmetischen 16 und 58 ist ein passives Zwischenlager 36 vorhanden, welches von beiden Teil-Plattenaufteilanlagen 10 A und 10 B genutzt werden kann. In einer vertikalen Ebene oberhalb des in Figur 21 linken Rands der rechten Teil-Plattenaufteilanlage 10 A ist eine Abtransporteinrichtung 38 mit einer Etikettiereinrichtung 40 angeordnet. Die Basis 31 des einzigen Roboters 30 ist mittig zwischen den beiden Aufteileinrichtungen bzw. Aufteillinie 14 angeordnet. Der Arbeitsbereich 32 überdeckt somit einen Teil der beiden Entnahmetische 16 und 58, das passive Zwischenlager 36, einen Teil des aktiven Zwischenlagers 34 und einen Teil der beiden Zuführtische 12 und 52.

Da das aktive Zwischenlager 34 lediglich auf den Zuführtisch 12 fördern kann, ist die die in Figur 21 rechte Teil-Plattenaufteilanlage 10 B deutlich einfacher und somit preiswerter aufgebaut als die in Figur 21 linke Teil-Plattenaufteilanlage 10 A. Somit werden Kosten gespart. Diese Kostenersparnis kann noch dadurch vergrößert werden, wenn die in Figur 21 rechte Teil-Plattenaufteilanlage 10 B deutlich kleiner dimensioniert ist als die in Figur 21 linke Teil-Plattenaufteilanlage 10 A, also einen kleineren Zuführtisch 52, eine kleinere zweite Fördereinrichtung 54, eine kürzere zweite Aufteillinie 56 und einen kleineren zweiten Entnahmetisch 58 aufweist. Bei der in Figur 21 gezeigten Plattenaufteilanlage 10 und bei den anderen Plattenaufteilanlagen 10, die eine erste Aufteileinrichtung und eine zweite Aufteileinrichtung aufweisen, kann die erste Aufteileinrichtung der in Figur 21 linken Teil-Plattenaufteilanlage 10 A vorzugsweise für die Durchführung von Längsschnitten und Querschnitten verwendet werden, wohingegen die zweite Aufteileinrichtung der in Figur 21 rechten Teil-Plattenaufteilanlage 10 B vorzugsweise für die Durchführung von Querschnitten und Nachschnitten eingesetzt wird.

In Figur 22 trägt ein Verfahren zum Aufteilen von plattenförmigen Werkstücken insgesamt das Bezugszeichen 100. Das Verfahren 100 ist anhand eines Flussdiagramms dargestellt und wird durch eine Steuereinrichtung - beispielsweise ein Computerprogramm auf einem Steuerrechner - der Plattenaufteilanlage 10 durchgeführt. Die Aufteilung des Verfahrens 100 in verschiedene Verfahrensschritte ist nur exemplarisch dargestellt und bedeutet nicht, dass das Verfahren genau mit dieser Anzahl von Schritten durchgeführt werden muss. Auch die Reihenfolge der Schritte kann in anderen Ausführungsbeispielen variieren. Gemäß einem weiteren nicht dargestellten Ausführungsbeispiel kann zum Beispiel eine Abfrage gleichzeitig zu einem in Figur 22 vorangehend dargestellten Verfahrensschritt stattfinden, z.B. kann eine Abfrage mit dem Bezugszeichen 104 parallel zu einer Aufteilung mit dem Bezugszeichen 103 erfolgen.

Das Verfahren 100 beginnt nach einem Startblock beispielsweise mit einem ersten Verfahrensschritt 101_1, bei dem eine Platte aus einem Plattenlager entnommen, auf dem Zuführtisch 12 abgelegt und mittels geöffneter Spannzangen 26 des Programmschiebers 24 zu einer Ausrichtposition transportiert wird. Alternativ kann es sich bei der Platte auch um ein aufzuteilendes Werkstück handeln, das beispielsweise bei einer vorigen Aufteilung einer Platte oder eines Plattenstreifens entstanden ist. In einem nächsten Verfahrensschritt 101_2 wird die Platte oder das aufzuteilende Werkstück mittels der Längs-Ausrichteinrichtung ausgerichtet und mittels der Spannzangen 26 des Programmschiebers 24 eingespannt. Bei der Queraufteilung wird das aufzuteilende Werkstück zusätzlich mittels der Quer-Ausrichteinrichtung ausgerichtet.

Alternativ kann die dem Plattenlager entnommene Platte auf den Entnahmetisch 16 abgelegt und durch den Spalt zwischen der ersten Aufteillinie 14 und der Andrückeinrichtung bzw. dem Druckbalken 18 der ersten Fördereinrichtung 22 zugeführt werden. Dazu schiebt der Roboter 30 die Platte durch den Spalt zwischen dem Maschinentisch 20 und dem Druckbalken 18 soweit hindurch, bis das Werkstück an den Spannzangen 26 und/oder an dem seitlichen Winkellineal ausgerichtet ist. Danach wird die Platte von den Spannzangen 26 gegriffen und eingespannt und der Roboter 30 gibt die Platte frei. Nun wird die Platte mittels der ersten Fördereinrichtung 22 in einer zur Aufteilung entgegengesetzten Richtung von der Aufteillinie 14 wegbewegt, bis beispielsweise die Platte unmittelbar in einer für eine erste Aufteilung oder einen Besäumschnitt vordefinierten Position zum Liegen kommt.

In einem weiteren Verfahrensschritt 102 wird die Platte oder das aufzuteilende Werkstück mittels der ersten Fördereinrichtung 22 soweit zur Aufteillinie 14 hinbewegt, dass in einem nächsten Verfahrensschritt 103 eine erste Aufteilung durchgeführt werden kann. In der Regel erfolgt vor der ersten Aufteilung ein Besäumschnitt. Dieser Besäumschnitt ist der Übersichtlichkeit halber in der Figur 22 nicht dargestellt. Nach der Aufteilung liegt das soeben abgetrennte bzw. bearbeitete Werkstück auf dem Entnahmetisch 16 und ein Reststück der Platte oder des aufzuteilenden Werkstücks, dass ggf. weiter aufgeteilt wird, liegt auf dem Maschinentisch 20 und ggf. teilweise noch auf dem Zuführtisch 12. Nun wird das abgetrennte Werkstück in einem weiteren Verfahrensschritt 104 von dem Roboter 30 mittels der horizontalen Saug-Greifeinrichtung vom Entnahmetisch 16 aufgenommen, wobei gemäß der Abmessung des Werkstücks entsprechend angeordnete pneumatische Saugglocken aktiviert werden. Alternativ kann diese Tätigkeit des Roboters 30 auch Bestandteil weiterer Verfahrensschritte 106 bzw. 115 sein, die weiter unten noch erläutert werden. Das letztmögliche von dem aufzuteilenden Werkstück abtrennbare und abgetrennte Werkstück wird durch die Spannzangen 26 oder die Ausschubvorrichtung auf den Entnahmetisch 16 ausgeschoben.

Die nächsten Verfahrensschritte hängen nun davon ab, ob das bei der Aufteilung im Verfahrensschritt 103 entstandene abgetrennte Werkstück ein letztes Werkstück ist, welches von der Platte oder dem aufzuteilenden Werkstück abgeteilt konnte. Dazu erfolgt beispielsweise im Verfahrensschritt 105 eine Abfrage "Letztes Werkstück?". Wenn das Ergebnis ein Nein (N) ist, dann geht es beispielsweise mit dem Verfahrensschritt 106 weiter, bei dem das zuletzt entstandene abgetrennte Werkstück, welches auf dem Entnahmetisch 16 liegt, derart mittels des Roboters 30 gehandhabt wird, dass das Werkstück in dem aktiven Zwischenlager 34, dem passiven Zwischenlager 36 oder auf dem Entnahmetisch 16 an einer vordefinierten Stelle zwischengelagert wird, auf der Abtransporteinrichtung 38 abtransportiert oder in einem Abstapelbereich 46 an einer vordefinierten Stelle abgestapelt wird.

Dabei erfolgt die Handhabung mittels des motorisch schwenk- und drehbar gelagerten Roboterarms des Roboters 30 vorzugsweise auf kürzestem direkten Weg zwischen dem Entnahmetisch 16 und einem der oben genannten Ablageorte auf einer ersten Verlagerungsbahn ggf. über Aufbauten der Plattenaufteilanlage 10 wie den Druckbalken 18 oder die Abtransporteinrichtung 38 hinweg. Ein Bediener müsste hingegen um die diese Komponenten der Plattenaufteilanlage 10 mit dem Werkstück herumgehen. Wenn hingegen das Ergebnis im Verfahrensschritt 105 ein Ja (J) ist, dann geht es mit dem Verfahrensschritt 114 weiter, der in einem der nachfolgenden Absätze beschrieben ist.

Auf den Verfahrensschritt 106 erfolgt in einem Verfahrensschritt 107 eine weitere Abfrage, ob die Aufteilung der sich gerade in Aufteilung befindlichen Platte oder des sich gerade in Aufteilung befindlichen aufzuteilenden Werkstücks fertig ist. Wenn das Ergebnis ein Nein (N) ist, dann geht es mit dem Verfahrensschritt 102 weiter. Wenn hingegen das Ergebnis ein Ja (J) ist, dann erfolgt in einem Verfahrensschritt 108_1 eine weitere Abfrage, ob eine Aufteilung einer weiteren Platte ansteht und Priorität hat. Wenn das Ergebnis ein Ja (J) ist, dann wird das Verfahren mit dem Verfahrensschritt 101_1 fortgesetzt. Wenn hingegen das Ergebnis ein Nein (N) ist, folgt eine Fortsetzung des Verfahrens mit dem Verfahrensschritt 108_2, bei dem eine weitere Abfrage erfolgt, ob die aktuelle Auftragsplanung bzw. eine sich aktuell in Bearbeitung befindliche Kommissionierung die weitere Aufteilung eines bei einer vorigen Aufteilung entstandenen Werkstücks, welches zwischengelagert ist, vorsieht.

Wenn das Ergebnis ein Nein (N) ist, dann geht es entweder wie in Figur 22 dargestellt unmittelbar mit dem Verfahrensschritt 108_1 weiter oder das Verfahren wartet auf eine Eingabe eines neuen Auftrags durch einen Bediener oder eine Übertragung eines neuen Auftrags von einem übergeordneten EDV-System, bei dem mehrere oder alle Fertigungsanlagen in einem Industriebetrieb mittels einer Maschine-zu-Maschine-Kommunikation miteinander vernetzt sind und auf Basis des Netzzugriffs Information ein/ausleiten sowie daraus höherwertige Funktionen, wie z.B. Handlungsanweisungen, ableiten können (Stichwort "Industrie 4.0"). Das Verfahren wird erst mit dem Verfahrensschritt 108_1 fortgesetzt, wenn eine solche Eingabe oder Übertragung stattgefunden hat.

Wenn hingegen das Ergebnis ein Ja (J) ist, dann wird das Verfahren mit einem Verfahrensschritt 109 fortgesetzt, bei dem der Roboter 30 ein im aktiven Zwischenlager 34, im passiven Zwischenlager 36 oder auf dem Entnahmetisch 16 liegendes zwischengelagertes Werkstück handhabt, in dem der Roboter 30 das zwischengelagerte Werkstück dem aktiven Zwischenlager 34 oder dem passiven Zwischenlager 36 von einer vordefinierten Stelle entnimmt und vorzugsweise auf kürzestem direkten Weg auf einer zweiten Verlagerungsbahn ggf. über Aufbauten der Plattenaufteilanlage 10 wie den Druckbalken 18 oder die Abtransporteinrichtung 38 hinweg in Richtung einer vordefinierten programmierten Ablageposition des Entnahmetisches 16 bewegt. In einem nachfolgenden Verfahrensschritt 110 erfolgt die Handhabung durch den Roboter 30 in der Weise, dass das zwischengelagerte Werkstück bezüglich einer vordefinierten programmierten Ausrichtung orientiert und in der vordefinierten programmierten Ablageposition des Entnahmetisches 16 abgelegt wird.

Das Verfahren 100 wird mit einem Verfahrensschritt 111 fortgesetzt, bei dem das zwischengelagerte Werkstück oder ein soeben aufgeteiltes bzw. bearbeitetes Werkstück durch den Spalt zwischen der ersten Aufteillinie 14 und der Andrückeinrichtung bzw. dem Druckbalken 18 der ersten Fördereinrichtung 22 zugeführt wird. Dazu schiebt der Roboter 30 das Werkstück durch den Spalt zwischen dem Maschinentisch 20 und dem Druckbalken 18 soweit hindurch, bis das Werkstück an den Spannzangen 26 und/oder an dem seitlichen Winkellineal ausgerichtet ist. In einem nächsten Verfahrensschritt 112 wird das Werkstück von den Spannzangen 26 gegriffen und eingespannt und der Roboter 30 gibt das Werkstück frei.

Es erfolgt in einem weiteren Verfahrensschritt 113 ein Rücktransport des Werkstücks mittels der ersten Fördereinrichtung 22 in einer zur Aufteilung entgegengesetzten Richtung weg von der Aufteillinie 14, bis beispielsweise das Werkstück unmittelbar in einer für eine (beispielsweise erste) Aufteilung oder einen Besäumschnitt vordefinierten Position zum Liegen kommt. In einem solchen Fall wird das Verfahren 100 direkt mit dem Verfahrensschritt 103 fortgesetzt.

Wenn das bei der Aufteilung 103 entstandene Werkstück ein letztes Werkstück ist, dass von der Platte abgeteilt werden konnte, dann erfolgt im Verfahrensschritt 114 eine Abfrage, ob das Werkstück selbst weiter aufgeteilt werden soll. Wenn das Ergebnis ein Nein (N) ist, dann geht es mit dem Verfahrensschritt 106 weiter. Wenn hingegen das Ergebnis ein Ja (J) ist, dann erfolgt in einem Verfahrensschritt 115 eine Handhabung des Werkstücks durch den Roboter 30, bei der das Werkstück vorzugsweise um 90° gedreht wird. Das Verfahren 100 wird anschließend mit dem Verfahrensschritt 111 fortgesetzt.

Bei dem Verfahren 100 wird der selbe entsprechend konfigurierte Roboter 30 dazu eingesetzt, Werkstücke zwischenzulagern, auf dem Entnahmetisch 16 für eine weitere Aufteilung zu positionieren und durch den Spalt zwischen der ersten Aufteillinie 14 und der Andrückeinrichtung bzw. dem Druckbalken 18 der ersten Fördereinrichtung 22 zuzuführen. Als weitere mögliche Optionen wird der selbe entsprechend konfigurierte Roboter 30 dazu eingesetzt, ferner Werkstücke abzustapeln und/oder Werkstücke auf der Abtransporteinrichtung 38 abzulegen.

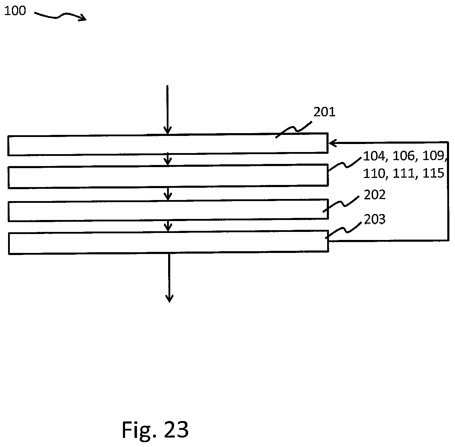

In der Figur 23 ist eine optionale Erweiterung des Verfahrens 100 unmittelbar vor und nach den Handhabungsschritten 104, 106, 109, 110, 111 und/oder 115 des Roboters 30 dargestellt, um Zeitdauern für eine Durchführung der Handhabungsschritte 104, 106, 109, 110, 111 und/oder 115 zu messen und in einem elektronischen Speicher abzuspeichern. Die Erweiterung des Verfahrens 100 kann vorzugsweise während der Einfahrphase der Plattenaufteilanlage 10 eingesetzt werden. In einem zusätzlichen Verfahrensschritt 201 wird gleichzeitig mit einem Beginn eines der Handhabungsschritte 104, 106, 109, 110, 111 und/oder 115 durch den Roboter 30 eine Zeitmessung durch die Steuereinrichtung der Plattenaufteilanlage 10 gestartet.

Zuvor kann der Roboter 30 vorzugsweise in eine vordefinierte Referenzposition gefahren werden. Dann wird der jeweilige Handhabungsschritt 104, 106, 109, 110, 111 und/oder 115 durchgeführt. In einem weiteren zusätzlichen Verfahrensschritt 202 wird gleichzeitig mit einer Beendigung eines der Handhabungsschritte 104, 106, 109, 110, 111 und/oder 115 durch den Roboter 30 eine Zeitmessung durch die Steuereinrichtung der Plattenaufteilanlage 10 gestoppt. Vorzugsweise wird die Zeitmessung gestoppt, sobald der Roboter 30 die Referenzposition wieder erreicht hat. Anschließend wird eine gemessene Zeitdauer dem durchgeführten Handhabungsschritt 104, 106, 109, 110, 111 bzw. 115 zugeordnet und beispielsweise in Form einer Tabelle in einem elektronischen Speicher abgespeichert, wobei eine erste Spalte der Tabelle eine Kennung für den jeweiligen Handhabungsschritt 104, 106, 109, 110, 111 bzw. 115 enthält und eine zweite Spalte die gemessene Zeitdauer. Optional könnten für den gleichen Handhabungsschritt 104, 106, 109, 110, 111 bzw. 115 nach und nach mehrere gemessene Zeitdauern abgespeichert und ein Mittelwert über die gemessenen Zeitdauern gebildet und in einer weiteren Tabellenspalte abgespeichert werden. Das Verfahren wird anschließend mit dem jeweiligen in Figur 22 dargestellten Verfahrensschritt fortgesetzt.

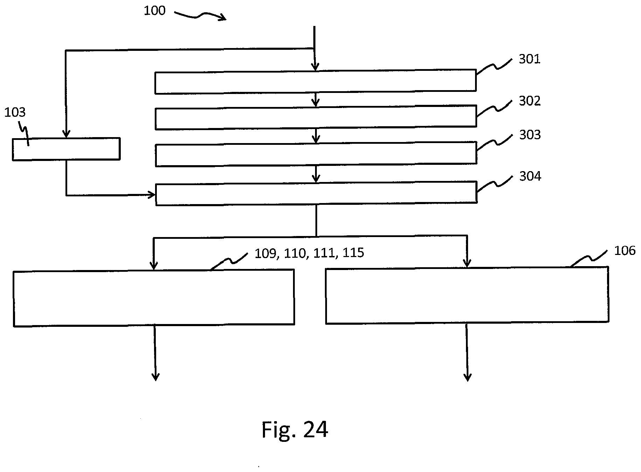

Figur 24 zeigt eine weitere optionale Erweiterung des Verfahrens 100 basierend auf der Erweiterung des Verfahrens 100 nach der Figur 23, die beispielsweise zeitlich parallel zum Zeitpunkt des Aufteilungs-Verfahrensschritts 103 stattfindet, um die Produktivität der Plattenaufteilanlage 10 weiter zu steigern. Die Erweiterung des Verfahrens 100 kann vorzugsweise nach der Einfahrphase der Plattenaufteilanlage 10 eingesetzt werden.

In einem zusätzlichen Verfahrensschritt 301 nach dem Verfahrensschritt 102 werden basierend beispielsweise auf einem aktuellen Aufteilungsauftrag für einen Kunden oder für ein Möbelstück die nächsten mit dem Roboter 30 erforderlichen Handhabungsschritte aus der Menge der Handhabungsschritte 104, 106, 109, 110, 111, 115 abgefragt. Basierend auf den bei dieser Abfrage sich ergebenden Handhabungsschritten 104, 106, 109, 110, 111, 115 werden die zugehörigen abgespeicherten Zeitdauern aus dem elektronischen Speicher abgefragt. In einem weiteren zusätzlichen Verfahrensschritt 303 wird der nächste mit dem Roboter 30 durchzuführende Handhabungsschritt beispielsweise unter den Randbedingungen berechnet, dass die Plattenaufteilanlage 10 laufend mit Werkstücken zur Aufteilung versorgt wird und keine auf dem Entnahmetisch 16 liegenden Werkstücke eine Aufteilung und Ausgabe eines anderen Werkstücks behindern. Dabei werden die Abfragen der Verfahrensschritte 105, 107, 108 und 114 beispielsweise als Unterverfahrensschritte des Verfahrensschrittes 303 durchgeführt.

Anschließend erfolgt im Verfahrensschritt 304 eine Befehlsübergabe an den Roboter 30 für den berechneten nächsten durchzuführenden Handhabungsschritt. Das Ergebnis könnte beispielsweise sein, dass ein Zwischenlagern oder eine Abstapelung eines Werkstücks im Verfahrensschritt 106 zeitlich vor dem Zuführen eines anderen Werkstücks durch den Spalt zwischen der Aufteillinie 14 und der Andrückeinrichtung 18 erfolgen soll, damit für das sich gerade in Aufteilung befindliche Werkstück eine freie Ablagefläche auf dem Entnahmetisch 16 vorhanden ist.

In einer anderen Konstellation könnte als Berechnungsergebnis herauskommen, dass das Zuführen eines Werkstücks durch den Spalt zwischen der Aufteillinie 14 und der Andrückeinrichtung 18 vor einer Zwischenlagerung oder einer Abstapelung eines anderen Werkstücks erfolgen soll, damit die Aufteillinie 14 der Plattenaufteilanlage 10 mit dem Werkstück zur Aufteilung schnellstmöglich versorgt wird und nicht auf eine Beendigung einer anderen Handhabung des Roboters 30 warten muss.

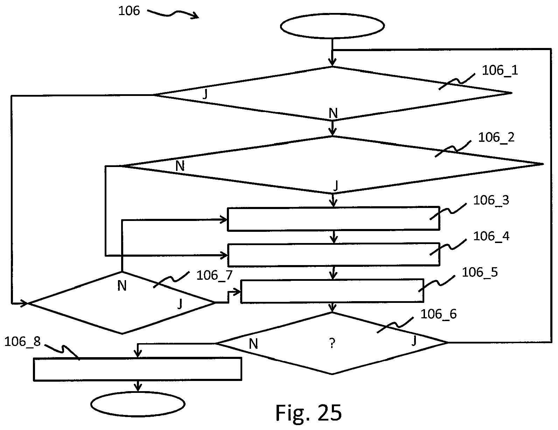

Die Figur 25 zeigt schematisch anhand eines weiteren Flussdiagrammes ein Ausführungsbeispiel für den Verfahrensschritt 106, bei dem abgestapelt wird, mittels des Roboters 30 insbesondere in Bezug auf die in Figur 5 dargestellte Plattenaufteilanlage 10. Die Anzahl der Unterverfahrensschritte und die Reihenfolge der Unterverfahrensschritte sind auch hier nur beispielhaft wiedergegeben.

Sobald ein Werkstück zur Abstapelung ansteht, wird in einem ersten Unterverfahrensschritt 106_1 geprüft, ob sich ein vordefinierter Abstapelbereich 46 im Arbeitsbereich 32 des Roboters 30 befindet. Ein vordefinierter Abstapelbereich 46 ist beispielsweise dadurch gekennzeichnet, dass der Abstapelbereich 46 einer Kommissionierung für einen bestimmten Kunden oder für ein bestimmtes Möbelstück zugeordnet ist. Bei einer wie in Figur 5 gezeigten radialen Anordnung der Abstapelbereiche 46 können mehr Abstapelbereiche 46 außerhalb des Arbeitsbereichs 32 des Roboters 30 in einer Parkposition vorgesehen werden als innerhalb des Arbeitsbereiches 32 des Roboters 30 in einer Abstapelungsposition positioniert werden können. In einem ersten Ausführungsbeispiel kann beispielsweise nur jeder zweite Abstapelbereich 46 in der Abstapelungsposition positioniert werden. In einem anderen Ausführungsbeispiel wird jeweils nur einer der Abstapelbereiche 46 in der Abstapelungsposition positioniert. Im Folgenden wird beispielhaft davon ausgegangen, dass nur ein Abstapelbereich 46 im Arbeitsbereich 32 des Roboters 30 zulässig ist bzw. positioniert werden kann.

Wenn das Ergebnis ein Nein (N) ist, sich also kein vordefinierter Abstapelbereich 46 im Arbeitsbereich 32 des Roboters 3 befindet, dann geht es mit einem Unterverfahrensschritt 106_2 weiter. Wenn hingegen das Ergebnis ein Ja (J) ist, dann setzt sich der Verfahrensschritt 106 mit einem Unterverfahrensschritt 106_7 fort. Während des Unterverfahrensschrittes 106_2 wird geprüft, ob sich ein anderer Abstapelbereich 46 in der Abstapelungsposition befindet. Wenn das Ergebnis ein Ja (J) ist, dann folgt ein Unterverfahrensschritt 106_3. Wenn hingegen das Ergebnis ein Nein (N) ist, dann geht es mit einem Unterverfahrensschritt 106_4 weiter.

Im Unterverfahrensschritt 106_3 wird der sich gegenwärtig im Arbeitsbereich 32 des Roboters 30 befindliche Abstapelbereich 46 vorzugsweise programmgesteuert und motorisch angetrieben aus der Abstapelungsposition in die Parkposition radial nach außen bewegt. In einem anschließenden Unterverfahrensschritt 106_4 wird der vordefinierte Abstapelbereich 46 vorzugsweise programmgesteuert und motorisch angetrieben aus der Parkposition radial nach innen in den Arbeitsbereich 32 des Roboters 30 bewegt. In einem nächsten Unterverfahrensschritt 106_5 stapelt der Roboter 30 das Werkstück in einem vordefinierten programmierten Bereich des Abstapelbereiches 46 ab.

Es folgt ein Unterverfahrensschritt 106_6, bei dem geprüft wird, ob noch weitere Werkstücke, die sich ggf. aus einer Aufteilung in dem Verfahrensschritt 103 ergeben, abgestapelt werden müssen. Wenn das Ergebnis dieser Prüfung ein Nein (N) ist, dann wird beispielsweise der sich im Arbeitsbereich 32 des Roboters 30 befindlich Abstapelbereich 46 in einem Unterverfahrensschritt 106_8 analog zu dem Unterverfahrensschritt 106_3 vorzugsweise programmgesteuert und motorisch angetrieben aus der Abstapelungsposition in die Parkposition radial nach außen bewegt, und die Abstapelung wird beendet, bis neue Werkstücke mit der Plattenaufteilanlage 10 erzeugt werden und abgestapelt werden sollen. Wenn hingegen das Ergebnis dieser Prüfung ein Ja (J) ist, dann wird der Abstapelungs-Verfahrensschritt 106 mit dem Unterverfahrensschritt 106_1 fortgesetzt.

Bei dem bereits erwähnten Unterverfahrensschritt 106_7 wird geprüft, ob der vordefinierte sich in der Abstapelungsposition befindliche Abstapelbereich 46 noch genügend Kapazität zum Abstapeln eines weiteren Werkstücks hat. Wenn das Ergebnis dieser Prüfung ein Ja (J) ist, dann wird der Abstapelungs-Verfahrensschritt 106 mit dem Unterverfahrensschritt 106_5 fortgesetzt. Wenn hingegen das Ergebnis der Prüfung ein Nein (N) ist, dann folgen die Unterverfahrensschritte 106_3 und 106_4, bei denen der bis zur Kapazitätsgrenze gefüllte Abstapelbereich 46 vorzugsweise programmgesteuert und motorisch angetrieben aus der Abstapelungsposition in die Parkposition radial nach außen bewegt und ein weiterer vordefinierter Abstapelbereich 46 mit ausreichender Kapazität vorzugsweise programmgesteuert und motorisch angetrieben aus der Parkposition radial nach innen in den Arbeitsbereich 32 des Roboters 30 bewegt wird.

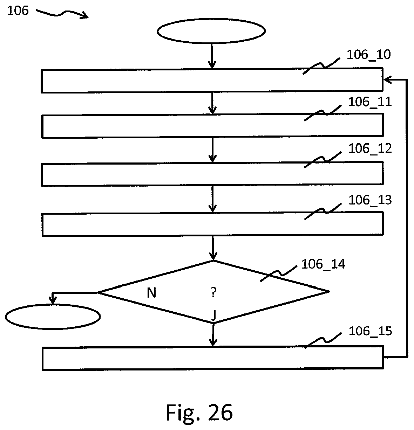

In der Figur 26 wird ein weiteres Flussdiagramm eines weiteren Ausführungsbeispiels für den Abstapelungs-Verfahrensschritt 106 mittels des Roboters 30 insbesondere in Bezug auf die in Figur 18 dargestellte Plattenaufteilanlage 10 gezeigt. Die Anzahl der Unterverfahrensschritte und die Reihenfolge der Unterverfahrensschritte sind auch hier nur beispielhaft wiedergegeben.

Der Abstapelungs-Verfahrensschritt 106 beginnt damit, dass ein soeben im Verfahrensschritt 103 aufgeteiltes Werkstück oder mehrere soeben im Verfahrensschritt 103 aufgeteilte Werkstücke von dem Roboter 30 auf der Abtransporteinrichtung 38 abgelegt werden. Dazu befindet sich die Basis des Roboters 30 beispielsweise in der Mitte des Entnahmetisches 16 oder allgemein in einem ersten Endpunkt des Verschiebeweges 68 (Figur 18) nahe der Aufteillinie 14, so dass der Arbeitsbereich 32 des Roboters 30 so angeordnet ist, dass der Roboter 30 bearbeitete Werkstücke vom Entnahmetisch 16 abholen oder Werkstücke zur weiteren Bearbeitung wieder durch den Spalt zwischen Maschinentisch 20 und Druckbalken 18 der ersten Fördereinrichtung 22 zuführen kann.

In einem weiteren Unterverfahrensschritt 106_11 wird das abgelegte Werkstück oder werden die abgelegten Werkstücke mittels der Abtransporteinrichtung 38 in Richtung der Abstapelbereiche 46 abtransportiert. In einem nachfolgenden oder parallel stattfindenden Unterverfahrensschritt 106_12 wird die Basis des Roboters 30 entlang des Verschiebewegs 68 zu einem zweiten und von der Aufteillinie 14 entfernten Endpunkt des Verschiebeweges 68 im Bereich der Abstapelbereiche 46 verschoben. Anschließend wird das abgelegte Werkstück oder werden die abgelegten Werkstücke in einem vordefinierten programmierten Abstapelbereich 46 der Abstapelbereiche 46 in einem Unterverfahrensschritt 106_13 abgestapelt.

In einem nächsten Unterverfahrensschritt 106_14 wird abgeprüft, ob noch weitere Werkstücke abgestapelt werden müssen. Wenn das Ergebnis der Prüfung ein Ja (J) ist, dann wird in einem nachfolgenden Unterverfahrensschritt 106_15 die Basis des Roboters 30 wieder an den ersten Endpunkt des Verschiebeweges 68 in Richtung zur Aufteillinie 14 verschoben. Der Abstapelungs-Verfahrensschritt 106 wird dann mit dem Unterverfahrensschritt 106_10 fortgesetzt. Wenn hingegen das Ergebnis der Prüfung ein Nein (N) ist, dann endet die Abstapelung bzw. wird die Abstapelung solange ausgesetzt, bis wieder Werkstücke von der Plattenaufteilanlage 10 angefertigt werden, die fertig aufgeteilt sind und abgestapelt werden können.

Die in den Figuren 22 bis 26 beschriebenen Verfahrensschritte werden durch entsprechende Funktionseinrichtungen, technische Mittel und Konfigurationen der Plattenaufteilanlage 10 bzw. des Roboters 30 realisiert und können entsprechend beansprucht werden. Der Einfachheit halber werden diese Funktionseinrichtungen, technischen Mittel und Konfiguration jeweils bezogen auf die Plattenaufteilanlage 10 bzw. den Roboter 30 nicht noch einmal dargestellt bzw. erläutert, denn ein Fachmann kann anhand der obigen Verfahrensbeschreibung und seines allgemeinen Fachwissens die entsprechenden Funktionseinrichtungen, technische Mittel und Konfigurationen der Plattenaufteilanlage 10 bzw. des Roboters 30 realisieren.

## Patentansprüche

1. Plattenaufteilanlage (10) zum Aufteilen von plattenförmigen Werkstücken, mit einem ersten Zuführtisch (12), mindestens einer ersten Aufteileinrichtung mit einer ersten Aufteillinie (14), einem ersten Entnahmetisch (16) und mindestens einer ersten Fördereinrichtung (22), wobei mit der ersten Fördereinrichtung (22) ein auf dem Zuführtisch (12) liegendes Werkstück in Richtung zur ersten Aufteillinie (14) hin bewegt werden kann, wobei die Plattenaufteilanlage (10) mindestens eine Handhabungseinrichtung zum Handhaben von bereits bearbeiteten oder zur Bearbeitung vorgesehenen Werkstücken aufweist, wobei die Handhabungseinrichtung einen Roboter (30) umfasst, und wobei der Roboter (30) eine Basis (31) und einen Arbeitsbereich (32) aufweist, **dadurch gekennzeichnet, dass** oberhalb von der ersten Aufteillinie (12) ein passives Zwischenlager (36) vorhanden ist, auf dem ein von der Aufteileinrichtung bearbeitetes bzw. abgetrenntes Werkstück vom Roboter (30) für eine Zwischenlagerung abgelegt werden kann, und dass der Arbeitsbereich (32) des Roboters (30) in der Draufsicht mindestens zum Teil einen Bereich des passiven Zwischenlagers (36) überdeckt.

2. Plattenaufteilanlage (10) nach Anspruch 1, **dadurch gekennzeichnet, dass** der Roboter (30) so angeordnet und ausgebildet ist, dass der Roboter (30) ein auf dem ersten Entnahmetisch (16) liegendes Werkstück handhaben und durch einen Spalt zwischen der ersten Aufteillinie (14) und einer Andrückeinrichtung (18) der ersten Fördereinrichtung (22) zuführen kann.

3. Plattenaufteilanlage (10) nach einem der vorhergehenden Ansprüche, **dadurch gekennzeichnet, dass** die erste Fördereinrichtung (22) einen Programmschieber (24) mit Spannzangen (26) umfasst, und dass die Spannzangen (26) in Richtung zum ersten Entnahmetisch (16) eine solche Länge aufweisen, dass die Spannzangen (26) wenigstens bis fast zum ersten Entnahmetisch (16) reichen, wenn der Programmschieber (24) sich in einer zum ersten Entnahmetisch (16) nächstliegenden Endstellung befindet.

4. Plattenaufteilanlage (10) nach Anspruch 2 und 3, **dadurch gekennzeichnet, dass** die Länge der Spannzangen (26) an das Zuführen des Werkstücks durch den Spalt angepasst sind.

5. Plattenaufteilanlage (10) nach einem der vorhergehenden Ansprüche, wobei der Arbeitsbereich (32) in einer Draufsicht vorzugsweise mindestens zum Teil einen Bereich des ersten Entnahmetisches (16) überdeckt.

6. Plattenaufteilanlage (10) nach einem der vorhergehenden Ansprüche, **dadurch gekennzeichnet, dass** die Plattenaufteilanlage (10) mindestens eine Rückfördereinrichtung (44) aufweist, und dass mit der Rückfördereinrichtung (44) bei der Bearbeitung entstandene Rest-Werkstücke in ein Lager zurück gefördert werden können.

7. Plattenaufteilanlage (10) nach einem der vorhergehenden Ansprüche, **dadurch gekennzeichnet, dass** die Plattenaufteilanlage (10) eine weitere erste Fördereinrichtung (22 B) aufweist, und dass mit der weiteren ersten Fördereinrichtung (22 B) ein auf dem ersten Zuführtisch (12) liegendes Werkstück in Richtung zur ersten Aufteillinie (14) hin bewegt werden kann.

8. Plattenaufteilanlage (10) nach einem der vorhergehenden Ansprüche, **dadurch gekennzeichnet, dass** der Arbeitsbereich (32) des Roboters (30) in der Draufsicht mindestens zum Teil einen Abstapelbereich (46) überdeckt, wobei der Abstapelbereich (46) gegebenenfalls eine Mehrzahl von Abstapelplätzen umfassen kann, und vorzugsweise dass mindestens ein Abstapelbereich (46) in einer Richtung radial zur Basis (31) des Roboters (30), insbesondere auf Schienen, beweglich ist.

9. Plattenaufteilanlage (10) nach einem der vorhergehenden Ansprüche, **dadurch gekennzeichnet, dass** seitlich und/oder oberhalb vom ersten Zuführtisch (12) und/oder ersten Entnahmetisch (16) ein passives Zwischenlager (36) vorhanden ist, und dass der Arbeitsbereich (32) des Roboters (30) in der Draufsicht mindestens zum Teil einen Bereich des passiven Zwischenlagers (36) überdeckt, und vorzugsweise dass oberhalb vom ersten Zuführtisch (12) ein aktives Zwischenlager (34) angeordnet ist, und dass dem aktiven Zwischenlager (34) eine eigene Zwischenlager-Fördereinrichtung zugeordnet ist.

10. Plattenaufteilanlage (10) nach einem der vorhergehenden Ansprüche, **dadurch gekennzeichnet, dass** die Basis (31) des Roboters (30) im Bereich des ersten Entnahmetisches (16) oder oberhalb von der ersten Aufteillinie (14) angeordnet ist.

11. Plattenaufteilanlage (10) nach einem der vorhergehenden Ansprüche, **dadurch gekennzeichnet, dass** die Basis (31) des Roboters (30) horizontal beweglich ist.

12. Plattenaufteilanlage (10) nach einem der vorhergehenden Ansprüche, **dadurch gekennzeichnet, dass** die Plattenaufteilanlage (10) mindestens einen zweiten Zuführtisch (52) mit einer dem zweiten Zuführtisch (52) zugeordneten zweiten Fördereinrichtung (54), mindestens eine zweite Aufteileinrichtung mit einer zweiten Aufteillinie (56), und mindestens einen zweiten Entnahmetisch (58) umfasst, wobei die erste Aufteillinie (14) zu der zweiten Aufteillinie (56) in einem Winkel angeordnet ist, der in einem Bereich von 0° bis 90° liegt, und vorzugsweise dass der Arbeitsbereich (32) des Roboters (30) in der Draufsicht mindestens zum Teil einen Bereich des ersten Entnahmetisches (16) und mindestens zum Teil einen Bereich des zweiten Zuführtisches (58) und mindestens zum Teil einen Bereich des aktiven Zwischenlagers (34) überdeckt.

13. Plattenaufteilanlage (10) nach Anspruch 12, **dadurch gekennzeichnet, dass** die Zuführtische (12, 52), Aufteillinien (12, 56) und Entnahmetische (16, 58) nebeneinander und parallel zueinander angeordnet sind, dass sämtlichen Zuführtischen (12, 52) eine gemeinsame Zuführeinrichtung (66) zugeordnet ist, und vorzugsweise dass eine Abtransporteinrichtung (38) zum Abtransportieren bearbeiteter Werkstücke vertikal in einer anderen Ebene als die Zuführeinrichtung (66) angeordnet ist.

14. Plattenaufteilanlage (10) nach Anspruch 12, **dadurch gekennzeichnet, dass** die Plattenaufteilanlage (10) zwei Zuführtische (12, 52) mit jeweiligen Fördereinrichtungen (22, 54), zwei Aufteillinien (14, 56) und zwei Entnahmetische (16, 58) aufweist, dass die zwei Zuführtische (12, 52), die jeweiligen Fördereinrichtungen (22, 54), die zwei Aufteillinien (14, 56) und die zwei Entnahmetische (16, 58) jeweils nebeneinander und parallel zueinander angeordnet sind, und dass der Arbeitsbereich (32) des Roboters (30) in der Draufsicht beide Zuführtische (12, 52) und beide Entnahmetische (16, 58) zumindest teilweise überdeckt.

15. Plattenaufteilanlage (10) nach Anspruch 12, **dadurch gekennzeichnet, dass** die zwei Zuführtische (12, 52), die zwei Aufteillinien (14, 56) und die zwei Entnahmetische (16, 58) nebeneinander und parallel zueinander angeordnet sind, dass die Plattenaufteilanlage (10) zwei Roboter (30 A, 30 B) umfasst, und dass die 2 Roboter (30 A, 30 B) so angeordnet sind, dass sich deren Arbeitsbereiche (32 A, 32 B) in der Draufsicht überlappen.

16. Plattenaufteilanlage (10) nach einem der Ansprüche 14 oder 15, **dadurch gekennzeichnet, dass** zwischen den zwei Zuführtischen (12, 52) ein aktives Zwischenlager (34) mit einer eigenen Zwischenlager-Fördereinrichtung und/oder ein passives Zwischenlager (36) angeordnet ist.

17. Plattenaufteilanlage nach einem der Ansprüche 14-16, **dadurch gekennzeichnet, dass** einer der beiden Zuführtische (52), die zugehörige Aufteillinie (56), und der zugehörige Entnahmetisch (58) kleiner dimensioniert sind als der andere der beiden Zuführtische (12) und die zugehörige Aufteillinie (14) und der zugehörige Entnahmetisch (16).

18. Verfahren (100) zum Aufteilen von plattenförmigen Werkstücken mittels einer Plattenaufteilanlage (10) umfassend:
- Hinbewegen (102) eines Werkstücks in Richtung zu einer Aufteillinie (14) der Plattenaufteilanlage (10),
- Aufteilen (103) des Werkstücks in ein bearbeitetes Werkstück und ein Reststück, und
- Handhaben (104, 106, 109, 110, 111, 112) des bearbeiteten Werkstücks oder eines zur Aufteilung vorgesehenen Werkstücks mittels eines Roboters (30) einer Handhabungseinrichtung,
**dadurch gekennzeichnet, dass**
- wobei oberhalb von der ersten Aufteillinie (14) ein passives Zwischenlager (36) vorhanden ist, auf dem ein von der Aufteileinrichtung bearbeitetes bzw. abgetrenntes Werkstück vom Roboter (30) für eine Zwischenlagerung abgelegt werden kann, und dass der Arbeitsbereich (32) des Roboters (30) in der Draufsicht mindestens zum Teil einen Bereich des passiven Zwischenlagers (36) überdeckt.

19. Verfahren (100) nach Anspruch 18, **dadurch gekennzeichnet, dass** das Handhaben (111) ein Zuführen des bearbeiteten Werkstücks oder des zur Aufteilung vorgesehenen Werkstücks durch einen Spalt zwischen der Aufteillinie (14) und einer Andrückeinrichtung (18) für eine weitere Aufteilung umfasst.

20. Verfahren (100) nach Anspruch 19, **dadurch gekennzeichnet, dass** das Handhaben mittels des Roboters (30) eine Drehung des bearbeiteten Werkstücks um 90° unmittelbar vor dem Zuführen durch den Spalt umfasst.

21. Verfahren nach einem der Ansprüche 18 bis 20, **dadurch gekennzeichnet, dass** das Handhaben ein Zwischenlagern (106) des bearbeiteten Werkstücks in ein Zwischenlager (34, 36) oder ein Entnehmen (109) eines zwischengelagerten Werkstücks aus einem Zwischenlager (34, 36) umfasst, und vorzugsweise dass eine durch eine Bewegung des Roboters (30) bedingte Verlagerungsbahn des bearbeiteten Werkstücks oder des zwischengelagerten Werkstücks über Aufbauten (18, 38) der Plattenaufteilanlage, insbesondere eine Andrückeinrichtung (18) oder eine Abtransportbahn (38), hinweg verläuft.

22. Verfahren (100) nach einem der vorangehenden Ansprüche 18 bis 21, **dadurch gekennzeichnet, dass** das Verfahren (100) ferner mindestens einen Ermittlungsschritt umfasst, in dem eine Reihenfolge von Verfahrensschritten anhand von Zeitdauern von Verfahrensschritten und/oder anhand von mindestens einer mit einem aufgeteilten und/oder zwischengelagerten Werkstück zusammenhängenden Eigenschaft ermittelt wird.

## Claims

1. Panel dividing system (10) for dividing panel shaped workpieces, comprising a first feed table (12), at least one first dividing device having a first dividing line (14), a first removal table (16) and at least one first conveying device (22), a workpiece lying on the feed table (12) being movable toward the first dividing line (14) by the first conveying device (22), the panel dividing system (10) having at least one handling device for handling workpieces which have already been machined or are intended for machining, the handling device comprising a robot (30) and the robot (30) having a base (31) and a working region (32), **characterized in that** there is a passive intermediate storage means (36) above the first dividing line (14), onto which a workpiece machined or separated by the dividing device may be placed by the robot (30) for intermediate storage, and **in that** the working region (32) of the robot (30) at least partially covers a region of the passive intermediate storage means (36) in plan view.

2. Panel dividing system (10) according to claim 1, **characterized in that** the robot (30) is arranged and designed such that the robot (30) can handle a workpiece lying on the first removal table (16) and can feed said workpiece through a gap between the first dividing line (14) and a pressing device (18) of the first conveying device (22).

3. Panel dividing system (10) according to any of the preceding claims, **characterized in that** the first conveying device (22) comprises a program fence (24) having collets (26), and **in that** the collets (26) have such a length in the direction of the first removal table (16) that the collets (26) extend at least almost as far as the first removal table (16) when the program fence (24) is in an end position closest to the first removal table (16).

4. Panel dividing system (10) according to claims 2 and 3, **characterized in that** the length of the collets (26) is adapted to the feeding of the workpiece through the gap.

5. Panel dividing system (10) according to any of the preceding claims, wherein the working region (32) preferably at least partially covers a region of the first removal table (16) in a plan view.

6. Panel dividing system (10) according to any of the preceding claims, **characterized in that** the panel dividing system (10) has at least one return device (44), and **in that** residual workpieces produced during machining can be conveyed back to a storage means by the return device (44).

7. Panel dividing system (10) according to any of the preceding claims, **characterized in that** the panel dividing system (10) has a further first conveying device (22 B), and **in that** a workpiece lying on the first feed table (12) is movable toward the first dividing line (14) by the further first conveying device (22 B).

8. Panel dividing system (10) according to any of the preceding claims, **characterized in that** the working region (32) of the robot (30) at least partially covers an unstacking region (46) in plan view, it being possible for the unstacking region (46) to optionally include a plurality of unstacking locations, and preferably **in that** at least one unstacking region (46) is movable in a direction radial to the base (31) of the robot (30), in particular on rails.

9. Panel dividing system (10) according to any of the preceding claims, **characterized in that** there is a passive intermediate storage means (36) to the side of and/or above the first feed table (12) and/or the first removal table (16), and **in that** the working region (32) of the robot (30) at least partially covers a region of the passive intermediate storage means (36) in plan view, and preferably **in that** an active intermediate storage means (34) is arranged above the first feed table (12), and **in that** a dedicated intermediate storage means conveying device is associated with the active intermediate storage means (34).

10. Panel dividing system (10) according to any of the preceding claims, **characterized in that** the base (31) of the robot (30) is arranged in the region of the first removal table (16) or above the first dividing line (14).

11. Panel dividing system (10) according to any of the preceding claims, **characterized in that** the base (31) of the robot (30) is horizontally movable.

12. Panel dividing system (10) according to any of the preceding claims, **characterized in that** the panel dividing system (10) comprises at least one second feed table (52) having a second conveying device (54) associated with the second feed table (52), at least one second dividing device having a second dividing line (56), and at least one second removal table (58), the first dividing line (14) being arranged at an angle from the second dividing line (56), which angle is in a range of from 0° to 90°, and preferably **in that** the working region (32) of the robot (30), in plan view, at least partially covers a region of the first removal table (16), at least partially covers a region of the second feed table (58) and at least partially covers a region of the active intermediate storage means (34).

13. Panel dividing system (10) according to claim 12, **characterized in that** the feed tables (12, 52), dividing lines (12, 56) and removal tables (16, 58) are arranged next to one another and in parallel with one another, **in that** a common feed device (66) is associated with all of the feed tables (12, 52), and preferably **in that** a removal device (38) for removing machined workpieces is arranged vertically in a different plane than the feed device (66).

14. Panel dividing system (10) according to claim 12, **characterized in that** the panel dividing system (10) has two feed tables (12, 52) having respective conveying devices (22, 54), two dividing lines (14, 56) and two removal tables (16, 58), **in that** the two feed tables (12, 52), the respective conveying devices (22, 54), the two dividing lines (14, 56) and the two removal tables (16, 58) are each arranged next to one another and in parallel with one another, and **in that** the working region (32) of the robot (30) at least partially covers the two feed tables (12, 52) and the two removal tables (16, 58) in plan view.

15. Panel dividing system (10) according to claim 12, **characterized in that** the two feed tables (12, 52), the two dividing lines (14, 56) and the two removal tables (16, 58) are arranged next to one another and in parallel with one another, **in that** the panel dividing system (10) comprises two robots (30 A, 30 B), and **in that** the two robots (30 A, 30 B) are arranged such that the working regions (32 A, 32 B) thereof overlap in plan view.

16. Panel dividing system (10) according to claim 14 or claim 15, **characterized in that** an active intermediate storage means (34) having a dedicated intermediate storage means conveying device and/or a passive intermediate storage means (36) is arranged between the two feed tables (12, 52).

17. Panel dividing system according to any of claims 14-16, **characterized in that** one of the two feed tables (52), the associated dividing line (56) and the associated removal table (58) are smaller than the other of the two feed tables (12) and the associated dividing line (14) and the associated removal table (16).

18. Method (100) for dividing panel shaped workpieces by means of a panel dividing system (10), comprising:
- moving (102) a workpiece toward a dividing line (14) of the panel dividing system (10),
- dividing (103) the workpiece into a machined workpiece and an offcut, and
- handling (104, 106, 109, 110, 111, 112) the machined workpiece or a workpiece intended for division by means of a robot (30) of a handling device,
**characterized in that**
- there is a passive intermediate storage means (36) above the first dividing line (14), onto which a workpiece machined or separated by the dividing device may be placed by the robot (30) for intermediate storage, and **in that** the working region (32) of the robot (30) at least partially covers a region of the passive intermediate storage means (36) in plan view.

19. Method (100) according to claim 18, **characterized in that** the handling (111) comprises feeding the machined workpiece or the workpiece intended for division through a gap between the dividing line (14) and a pressing device (18) for further division.

20. Method (100) according to claim 19, **characterized in that** the handling by means of the robot (30) comprises a rotation of the machined workpiece by 90° immediately before it is fed through the gap.

21. Method according to any of claims 18 to 20, **characterized in that** the handling comprises intermediately storing (106) the machined workpiece in an intermediate storage means (34, 36) or withdrawing (109) an intermediately stored workpiece from an intermediate storage means (34, 36), and preferably **in that** a displacement path of the machined workpiece or of the intermediately stored workpiece caused by a movement of the robot (30) extends over structures (18, 38) of the panel dividing system, in particular a pressing device (18) or a removal path (38).

22. Method (100) according to any of the preceding claims 18 to 21, **characterized in that** the method (100) further comprises at least one determination step in which a sequence of method steps is determined based on durations of method steps and/or based on at least one property associated with a divided and/or intermediately stored workpiece.

## Revendications

1. Installation de division de plaques (10) pour diviser des pièces en forme de plaques, avec une première table d'amenée (12), au moins un premier dispositif de division avec une première ligne de division (14), une première table de prélèvement (16) et au moins un premier dispositif de transport (22), dans laquelle une pièce située sur la table d'amenée (12) peut être déplacée en direction de la première ligne de division (14) avec le premier dispositif de transport (22), dans laquelle l'installation de division de plaques (10) présente au moins un dispositif de manipulation pour manipuler des pièces déjà usinées ou destinées à être usinées, dans laquelle le dispositif de manipulation comprend un robot (30), et dans laquelle le robot (30) présente une base (31) et une zone de travail (32), **caractérisée en ce qu'**une installation de stockage intermédiaire passive (36), sur laquelle une pièce usinée ou séparée par le dispositif de division peut être déposée par le robot (30) pour un stockage intermédiaire, est présente au-dessus de la première ligne de division (14), et que la zone de travail (32) du robot (30), dans la vue en élévation, recouvre au moins en partie une zone de l'installation de stockage intermédiaire passive (36).

2. Installation de division de plaques (10) selon la revendication 1, **caractérisée en ce que** le robot (30) est disposé et réalisé de sorte que le robot (30) peut manipuler une pièce située sur la première table de prélèvement (16) et l'amener à travers une fente entre la première ligne de division (14) et un dispositif de pression (18) du premier dispositif de transport (22).

3. Installation de division de plaques (10) selon l'une quelconque des revendications précédentes, **caractérisée en ce que** le premier dispositif de transport (22) comprend un coulisseau programmé (24) avec des pinces de serrage (26), et que les pinces de serrage (26) présentent en direction de la première table de prélèvement (16) une longueur telle que les pinces de serrage (26) vont au moins jusqu'à presque la première table de prélèvement (16) lorsque le coulisseau programmé (24) se trouve dans une position finale la plus proche de la première table de prélèvement (16).

4. Installation de division de plaques (10) selon la revendication 2 et 3, **caractérisée en ce que** la longueur des pinces de serrage (26) est adaptée à l'amenée de la pièce à travers la fente.

5. Installation de division de plaques (10) selon l'une quelconque des revendications précédentes, dans laquelle la zone de travail (32), dans une vue en élévation, recouvre de préférence au moins en partie une zone de la première table de prélèvement (16).

6. Installation de division de plaques (10) selon l'une quelconque des revendications précédentes, **caractérisée en ce que** l'installation de division de plaques (10) présente au moins un dispositif de renvoi (44), et que les pièces restantes produites lors de l'usinage peuvent être renvoyées dans une installation de stockage avec le dispositif de renvoi (44).

7. Installation de division de plaques (10) selon l'une quelconque des revendications précédentes, **caractérisée en ce que** l'installation de division de plaques (10) présente un autre premier dispositif de transport (22 B), et qu'une pièce située sur la première table d'amenée (12) peut être déplacée en direction de la première ligne de division (14) avec l'autre premier dispositif de transport (22 B).

8. Installation de division de plaques (10) selon l'une quelconque des revendications précédentes, **caractérisée en ce que** la zone de travail (32) du robot (30), dans la vue en élévation, recouvre au moins en partie une zone d'empilement (46), dans laquelle la zone d'empilement (46) peut éventuellement comprendre une pluralité de postes d'empilement, et de préférence qu'au moins une zone d'empilement (46) est mobile, en particulier sur des rails, dans une direction radiale par rapport à la base (31) du robot (30).

9. Installation de division de plaques (10) selon l'une quelconque des revendications précédentes, **caractérisée en ce qu'**une installation de stockage intermédiaire passive (36) est présente à côté et/ou au-dessus de la première table d'amenée (12) et/ou première table de prélèvement (16), et que la zone de travail (32) du robot (30), dans la vue en élévation, recouvre au moins en partie une zone de l'installation de stockage intermédiaire passive (36), et de préférence qu'une installation de stockage intermédiaire active (34) est disposée au-dessus de la première table d'amenée (12), et qu'un dispositif de transport d'installation de stockage intermédiaire propre est associé à l'installation de stockage intermédiaire active (34).

10. Installation de division de plaques (10) selon l'une quelconque des revendications précédentes, **caractérisée en ce que** la base (31) du robot (30) est disposée dans la zone de la première table de prélèvement (16) ou au-dessus de la première ligne de division (14).

11. Installation de division de plaques (10) selon l'une quelconque des revendications précédentes, **caractérisée en ce que** la base (31) du robot (30) est mobile horizontalement.

12. Installation de division de plaques (10) selon l'une quelconque des revendications précédentes, **caractérisée en ce que** l'installation de division de plaques (10) comprend au moins une deuxième table d'amenée (52) avec un deuxième dispositif de transport (54) associé à la deuxième table d'amenée (52), au moins un deuxième dispositif de division avec une deuxième ligne de division (56), et au moins une deuxième table de prélèvement (58), dans laquelle la première ligne de division (14) est disposée par rapport à la deuxième ligne de division (56) selon un angle qui se situe dans une plage de 0° à 90°, et de préférence que la zone de travail (32) du robot (30), dans la vue en élévation, recouvre au moins en partie une zone de la première table de prélèvement (16) et au moins en partie une zone de la deuxième table d'amenée (58) et au moins en partie une zone de l'installation de stockage intermédiaire active (34) .

13. Installation de division de plaques (10) selon la revendication 12, **caractérisée en ce que** les tables d'amenée (12, 52), lignes de division (12, 56) et tables de prélèvement (16, 58) sont disposées les unes à côté des autres et parallèlement les unes aux autres, qu'un dispositif d'amenée (66) commun est associé à toutes les tables d'amenée (12, 52), et de préférence qu'un dispositif d'évacuation (38) pour évacuer les pièces usinées est disposé verticalement dans un autre plan que le dispositif d'amenée (66).

14. Installation de division de plaques (10) selon la revendication 12, **caractérisée en ce que** l'installation de division de plaques (10) présente deux tables d'amenées (12, 52) avec des dispositifs de transport (22, 54) respectifs, deux lignes de division (14, 56) et deux tables de prélèvement (16, 58), que les deux tables d'amenée (12, 52), les dispositifs de transport (22, 54) respectifs, les deux lignes de division (14, 56) et les deux tables de prélèvement (16, 58) sont disposés respectivement les uns à côté des autres et parallèlement les uns aux autres, et que la zone de travail (32) du robot (30), dans la vue en élévation, recouvre au moins en partie les deux tables d'amenée (12, 52) et les deux tables de prélèvement (16, 58).

15. Installation de division de plaques (10) selon la revendication 12, **caractérisée en ce que** les deux tables d'amenée (12, 52), les deux lignes de division (14, 56) et les deux tables de prélèvement (16, 58) sont disposées les unes à côté des autres et parallèlement les unes aux autres, que l'installation de division de plaques (10) comprend deux robots (30 A, 30 B), et que les deux robots (30 A, 30 B) sont disposés de sorte que leurs zones de travail (32 A, 32 B) se chevauchent dans la vue en élévation.

16. Installation de division de plaques (10) selon l'une quelconque des revendications 14 ou 15, **caractérisée en ce qu'**une installation de stockage intermédiaire active (34) avec un dispositif de transport d'installation de stockage intermédiaire propre et/ou une installation de stockage intermédiaire passive (36) est disposée entre les deux tables d'amenée (12, 52).

17. Installation de division de plaques selon l'une quelconque des revendications 14-16, **caractérisée en ce qu'**une des deux tables d'amenée (52), la ligne de division (56) associée, et la table de prélèvement (58) associée sont dimensionnées de manière plus petite que l'autre des deux tables d'amenée (12) et la ligne de division (14) associée et la table de prélèvement (16) associée.

18. Procédé (100) pour diviser des pièces en forme de plaques au moyen d'une installation de division de plaques (10) comprenant:
- le déplacement (102) d'une pièce en direction d'une ligne de division (14) de l'installation de division de plaques (10),
- la division (103) de la pièce en une pièce usinée et une pièce restante, et
- la manipulation (104, 106, 109, 110, 111, 112) de la pièce usinée ou d'une pièce destinée à être divisée au moyen d'un robot (30) d'un dispositif de manipulation,
**caractérisé en ce que**
- une installation de stockage intermédiaire passive (36), sur laquelle une pièce usinée ou séparée par le dispositif de division peut être déposée par le robot (30) pour un stockage intermédiaire, est présente au-dessus de la première ligne de division (14), et que la zone de travail (32) du robot (30), dans la vue en élévation, recouvre au moins en partie une zone de l'installation de stockage intermédiaire passive (36).

19. Procédé (100) selon la revendication 18, **caractérisé en ce que** la manipulation (111) comprend une amenée de la pièce usinée ou de la pièce destinée à être divisée à travers une fente entre la ligne de division (14) et un dispositif de pression (18) pour une autre division.

20. Procédé selon la revendication 19, **caractérisé en ce que** la manipulation au moyen du robot (30) comprend une rotation de la pièce usinée de 90° immédiatement avant l'amenée à travers la fente.

21. Procédé selon l'une quelconque des revendications 18 à 20, **caractérisé en ce que** la manipulation comprend un stockage intermédiaire (106) de la pièce usinée dans une installation de stockage intermédiaire (34, 36) ou un prélèvement (109) d'une pièce stockée de manière intermédiaire d'une installation de stockage intermédiaire (34, 36), et de préférence qu'une trajectoire de déplacement de la pièce usinée ou de la pièce stockée de manière intermédiaire provoquée par un mouvement du robot (30) s'étend au-delà de structures (18, 38) de l'installation de division de plaques, en particulier d'un dispositif de pression (18) ou d'une bande d'évacuation (38).

22. Procédé (100) selon l'une quelconque des revendications précédentes 18 à 21, **caractérisé en ce que** le procédé (100) comprend en outre au moins une étape de détermination, dans laquelle une succession d'étapes de procédé est déterminée sur la base de durées d'étapes de procédé et/ou sur la base d'au moins une propriété liée à une pièce divisée et/ou stockée de manière intermédiaire.
